# EUROPÄISCHE PATENTSCHRIFT

(11) **EP 3 310 557 B1**
(45) Veröffentlichungstag und Bekanntmachung des Hinweises auf die Patenterteilung: **12.08.2020**
(21) Anmeldenummer: 16731842.7
(22) Anmeldetag: 16.06.2016
(51) Int. Cl.: B29C 64/153, B29C 64/205, B29C 64/245, B29C 64/255, B33Y 40/00

(54) **BOTTOM UP-PULVERFÖRDERMECHANISMUS UND VERFAHREN FÜR EINE PULVERBETTBASIERTEN LASERSTRAHLSCHMELZANLAGE**
BOTTOM-UP POWDER CONVEYING MECHANISM AND METHOD FOR A POWDER BED BASED LASER MELTING SYSTEM
MÉCANISME PROCÉDÉ DE TRANSPORT DE POUDRE DE BAS EN HAUT POUR UNE SYSTÈME DE FUSION AU LASER À BASE DE POUDRE

(30) Priorität: 19.06.2015 DE 102015109849
(43) Veröffentlichungstag der Anmeldung: 25.04.2018
(73) Patentinhaber: Aconity GmbH, 52134 Herzogenrath (DE)
(72) Erfinder: HAGEDORN, Yves, 52064 Aachen (DE); GÖRRES, Andreas, 52074 Aachen (DE)
(74) Vertreter: Moser Götze & Partner Patentanwälte mbB
(86) Internationale Anmeldenummer: PCT/EP2016/063950
(87) Internationale Veröffentlichungsnummer: WO 2016/202953

(56) Entgegenhaltungen:
- EP-A1- 1 316 408
- DE-A1-102009 029 765

## Beschreibung

Die Erfindung betrifft einen Bottum Up-Pulverfördermechanismus für eine PBLS-Anlage gemäß dem Oberbegriff von Anspruch 1.

Außerdem betrifft die Erfindung eine PBLS-Anlage mit einem Bottum Up-Pulverfördermechanismus gemäß dem Oberbegriff von Anspruch 5 sowie ein Verfahren zum Umrüsten und Betreiben einer PBLS-Anlage gemäß dem Oberbegriff von Anspruch 9.

Pulverbettbasiertes Laserstrahlschmelzen (PBLS), für das auch die Bezeichnung selektives Laserschmelzen verwendet wird, gehört zur Gruppe der generativen Fertigungsverfahren, die auch als Additive Manufacturing (AM) Verfahren bezeichnet werden. PBLS ist beispielsweise aus der deutschen Patenschrift DE 196 49 865 C1 bekannt. DE 10 2009 029765 offenbart die Merkmale des Oberbegriffs des Anspruchs 1.

Als pulverbettbasiertes Verfahren ist PBLS insbesondere vom selektiven Lasersintern sowie vom Laserauftragschweißen zu unterscheiden. Beim PBLS erfolgt ein schichtweises Herstellen von Bauteilen aus einem zunächst pulverförmig vorliegenden Werkstoff, insbesondere in Form von Kunststoffen oder Metallen, deranders als beim Laserauftragschweißen - schichtweise als ruhendes Pulverbett bereitgestellt wird und - anders als beim selektiven Lasersintern - vollständig aufgeschmolzen wird und ohne Zugabe von Bindemitteln erstarrt.

Beim PBLS-Verfahren, das auf einer entsprechenden PBLS-Anlage durchgeführt werden kann, wird mittels eines beweglichen Auftragsmediums, das beispielsweise als Bürste ausgebildet sein kann, eine erste dünne Pulverschicht des zu verarbeitenden Werkstoffs mit einer gleichmäßigen Schichtdicke von üblicherweise 10 bis 100 µm auf eine auch als Grundplatte bezeichnete Substratplatte aufgetragen. Das Auftragsmedium ist üblicherweise an einem Schieber befestigt, der zur erforderlichen Bewegung des Auftragsmediums entsprechend beweglich gelagert ist. Die Substratplatte wird von einer Trägerplatte getragen und ist auf dieser lösbar befestigt, beispielsweise angeschraubt. Die Trägerplatte und dadurch auch die Substratplatte sind hierbei zunächst in einer Ausgangslage angeordnet, in der sich die Substratplatte mit ihrer Oberfläche um den Betrag der gewünschten Schichtdicke unterhalb einer sich horizontal erstreckenden Arbeitsebene befindet. Üblicherweise bildet die Trägerplatte den beweglichen Boden eines Behälters (Bauteilbehälter), der sich mit einer dem Boden gegenüberliegenden oberen Öffnung unterhalb der Arbeitsebene an die Arbeitsebene anschließt. Hierbei ist der Boden nach Art eines Kolbens innerhalb der rechtwinklig zum Boden verlaufenden Seitenwand des Behälters eingepasst und beweglich, um zusammen mit der Substratplatte schrittweise in Bezug zur Arbeitsebene abgesenkt werden zu können. Oberhalb und parallel zur Arbeitsebene ist das Auftragsmedium über den Schieber beweglich, um das Pulver ausgehend von der Arbeitsebene auf die Trägerplatte beziehungsweise die darauf angeordnete Substratplatte zu schieben beziehungsweise aufzutragen. Beim Überfahren des Behälters überspannt das Auftragsmedium die Öffnung des Behälters vollständig, um zwischen der Trägerplatte und der Arbeitsebene eine gleichmäßige Pulverschicht mit möglichst ebener Oberfläche erzeugen zu können.

Anschließend wird das Pulver der aufgetragenen Schicht mittels eines Laserstrahls selektiv beziehungsweise lokal vollständig aufgeschmolzen, das heißt nur in nach einem 3D-CAD-Modell des zu fertigenden Bauteils ausgewählten Bereichen. Hierzu wird das 3D-CAD-Modell von einer Software in einzelne Schichten unterteilt (slicen), aus denen Bahnen nach Art von Höhenlinien des Bauteils als ausgewählte Bereiche ermittelt werden, entlang denen der Laserstrahl zum selektiven beziehungsweise lokalen Aufschmelzen der jeweiligen Pulverschicht geführt wird. Durch das vollständige Aufschmelzen und anschließende Erstarren der jeweiligen Pulverschicht erfolgt ein schichtweises Verdichten des Werkstoffs zu dem zu fertigenden Bauteil.

Ausgehend von der Ausgangslage wird die dementsprechend als Bauplattform dienende Trägerplatte beziehungsweise der Boden des Behälters nach dem entsprechenden Abtasten beziehungsweise Scannen der ausgewählten Bereiche der ersten Pulverschicht um den Betrag einer weiteren gewünschten Schichtdicke abgesenkt und eine weitere Pulverschicht auf die jeweils vorherige Schicht aufgetragen, aufgeschmolzen und hierdurch verdichtet sowie mit der vorherigen Schicht verbunden. Zumindest eine der vorherigen Schichten wird hierbei zumindest teilweise wieder aufgeschmolzen, um eine stoffschlüssige Verbindung mit der folgenden Schicht zu gewährleisten. Dieser Zyklus wiederholt sich so lange mit mehreren Pulverschichten, bis das Bauteil fertig gestellt ist. Durch das selektive Aufschmelzen ausgewählter Bereiche in jeder Pulverschicht wird in dem Behälter zwischen der Trägerplatte und der Arbeitsebene auch ein Pulverbett aus nicht aufgeschmolzenem Pulver aller aufgetragenen Schichten aufgebaut, das das Bauteil umgibt. Zur Bauteilentnahme aus dem Pulverbett wird der von der Trägerplatte gebildete Boden des Behälters in Richtung der Arbeitsebene und damit in Richtung einer dem Boden gegenüberliegenden oberen Öffnung des Behälters angehoben und die Substratplatte, mit der das Bauteil über die erste Schicht stoffschlüssig verbunden ist, von der Trägerplatte gelöst und aus der PBLS-Anlage entnommen. Das Bauteil wird anschließend von der Substratplatte getrennt, beispielswiese abgesägt. Auf diese Weise können mittels PBLS drei-dimensionale Bauteile formlos, das heißt ohne Werkzeuge oder Formen, und nahezu ohne Einschränkungen bezüglich der geometrischen Bauteilkomplexität hergestellt werden.

Um dem Auftragsmedium einer PBLS-Anlage das Pulver auf der Arbeitsebene bereit zu stellen, sind im Wesentlichen Pulverfördermechanismen nach dem Bottom Up Prinzip und nach dem Top Down Prinzip bekannt, über die das Pulver zur Arbeitsebene gefördert werden kann. Bei einem Bottom Up Mechanismus wird das Pulver von unterhalb der Arbeitsebene nach oben auf die Arbeitsebene und bei einem Top Down Mechanismus von oberhalb der Arbeitsebene nach unten auf die Arbeitsebene gefördert.

Beispielsweise sind PBLS-Anlagen mit einem Bottom Up Mechanismus bekannt, der einen Behälter (Pulverbehälter) umfasst, der analog zu dem oben beschriebenen Behälter für das Bauteil ausgebildet ist. Dementsprechend umfasst dieser Behälter ebenfalls einen nach Art eines Kolbens beweglichen Boden. Eine dem Boden gegenüberliegende obere Öffnung des Behälters ist in der Arbeitsebene angeordnet, wovon ausgehend sich der Behälter unterhalb der Arbeitsebene an die Arbeitsebene anschließt. Das in dem Behälter des Bottom Up-Pulverfördermechanismus bevorratete Pulver wird durch Anheben der den Boden bildenden Trägerplatte innerhalb des Behälters und damit einhergehende Verkleinerung des verfügbaren Volumens des Behälters in Richtung der oberen Öffnung beziehungsweise durch die dort angeordnete obere Öffnung des Behälters bewegt und damit zur Arbeitsebene gefördert und dort dem Auftragsmedium bereit gestellt. Durch umgekehrtes Absenken des Bodens wird das verfügbare Volumen des Behälters vergrößert, um darin eine entsprechende Menge an Pulver aufnehmen und bevorraten zu können.

Anders als bei Top Down Mechanismen fällt das Pulver bei einem Bottom Up Mechanismus nicht schwerkraftgetrieben in den Bereich der Arbeitsebene. Dadurch wird eine Staubbildung, die zu einer unerwünschten Verschmutzung optischer und beweglicher Bauteile der PBLS-Anlage führt, minimiert und in der Folge eine gute Prozessqualität und -stabilität gewährleistet. Darüber hinaus sind Bottum Up Mechanismen mit einem Behälter mit kolbenartig beweglichem Boden besonders einfach zu reinigen, wenn beispielsweise für einen Werkstoffwechsel das Pulver möglichst rückstandslos ausgetauscht werden muss. Dies ist bei anderen Bottom Up Mechanismen, die das Pulver beispielsweise mittels einer Förderschnecke zur Arbeitsebene befördern, mit größerem Aufwand verbunden.

Außerdem ist es bekannt, in einer PBLS-Anlage neben dem Bauteilbehälter einen so genannten Pulverüberlauf vorzusehen, in das überschüssiges Pulver hinein geschoben werden kann, das sich noch vor dem Schieber befindet, nachdem dieser zum Aufbau einer neuen Pulverschicht den Bauteilbehälter überfahren hat. Hierfür weist die Arbeitsebene neben dem Bauteilbehälter eine Ausnehmung auf, die von der Öffnung eines den Pulverüberlauf bildenden Auffangbehälters gebildet wird, der sich über die Öffnung unterhalb der Arbeitsebene an die Ausnehmung anschließt und in den das überschüssige Pulver hinein fallen kann. Durch einen solchen Pulverüberlauf kann die Prozesskammer für eine gute Prozessstabilität möglichst frei von überschüssigem Pulver gehalten werden.

Um während des Schmelzprozesses eine durch Oxidation erfolgende Kontamination des Werkstoffs zu verhindern, wird PBLS in einer Schutzgasatmosphäre durchgeführt. Dadurch können mittels PBLS relative Bauteildichten von mehr als 99% erreicht werden. Die als Schüttdichte bezeichnete relative Dichte des Pulvers beträgt hingegen etwa 50% und damit etwa die Hälfte der relativen Dichte des erzeugten Bauteils. Die relative Dichte dient somit als Maß für die Porosität des Werkstoffs in seiner jeweils vorliegenden Form, das heißt als fertiges Bauteil oder als Pulver, in Bezug auf den entsprechenden Werkstoff in einer porenfreien Form. Auch weisen die mittels PBLS gefertigten Bauteile mechanische Eigenschaften auf, die weitgehend denjenigen des Grundwerkstoffs beziehungsweise denjenigen entsprechen, die Bauteile aufweisen, die mittels konventioneller Verfahren aus dem Grundwerkstoff hergestellt werden.

Zu diesem Zweck weisen PBLS-Anlagen eine gasdichte Prozesskammer auf, in der eine entsprechende Schutzgasatmosphäre, insbesondere eine inerte Gasatmosphäre mit Argon oder Stickstoff, aufrechterhalten wird. Unmittelbar innerhalb der Prozesskammer sind üblicherweise zumindest die Arbeitsebene und das Auftragsmedium angeordnet. Auch in dem Bauteilbehälter mit der Bauplattform und der Substratplatte, dem Pulverbehälter des Bottom Up-Pulverfördermechanismus und dem Pulverüberlauf herrscht Schutzgasatmosphäre, so dass diese hierfür entsprechend gasdicht an die Prozesskammer angeschlossen sind.

Bei bekannten PBLS-Anlagen mit einem Bottum Up-Pulverfördermechanismus erfolgt dessen Pulverbeladung üblicherweise bei geöffneter Prozesskammer und damit nicht im laufenden Betrieb. Außerdem sind bekannte PBLS-Anlagen üblicherweise von vornherein auf eine einmal gewählte Auslegung festgelegt, insbesondere hinsichtlich der Dimensionierung der Bauplattform und damit hinsichtlich der maximalen Größe der herstellbaren Bauteile. Eine diesbezüglich nachträgliche Anpassung oder Umrüstung entsprechend wechselnder Anforderungen ist nicht vorgesehen. Eine derartige PBLS-Anlage ist eine beispielsweise aus der deutschen Offenlegungsschrift DE 10 2004 041 633 A1 bekannt.

Aus der DE 10 2009 029 765 A1 ist ein Bottom Up-Pulverfördermechanismus im Sinne des Oberbegriffs von Anspruch 1 bekannt.

Die EP 1 316 408 A1 offenbart einen Bottom Up-Pulverfördermechanismus der eine Dosierkammer mit einem nach Art eines Kolbens beweglichen Boden umfasst, um Pulver in Richtung einer dem Boden gegenüberliegenden oberen Öffnung der Dosierkammer zu fördern. In einer Seitenwand der Dosierkammer ist unterhalb der oberen Öffnung eine untere Öffnung vorgesehen, die über eine Leitung mit einem Auffangbehälter verbunden ist. Der Auffangbehälter ist unterhalb der unteren Öffnung und unterhalb eines als Bauteilbehälter dienenden zweiten Behälter angeordnet und über eine rohrförmige Pulverabführeinrichtung mit dem Bauteilbehälter verbunden. Dadurch kann Pulver aus dem Bauteilbehälter in den Auffangbehälter abgeführt und über ein Gebläse durch die Leitung zurück in den Pulverbehälter gefördert werden.

Aus der DE 20 2011 003 443 U1 ist ebenfalls ein als PBLS-Anlage mit einem als Pulverbehälter betriebenen Behälter eines Bottom Up-Pulverfördermechanismus bekannt, in dessen Seitenwand ein Absaugkanal vorgesehen ist.

Der Erfindung liegt die Aufgabe zu Grunde, einen verbesserten Bottum Up-Pulverfördermechanismus für eine PBLS-Anlage und eine verbesserte PBLS-Anlage, die jeweils nachträglich entsprechend wechselnder Anforderungen modular erweiterbar beziehungsweise umrüstbar sind, sowie ein Verfahren zum Umrüsten und Betreiben einer PBLS-Anlage zu schaffen, um diese nachträglich entsprechend wechselnder Anforderungen modular anpassen zu können.

Diese Aufgabe wird durch einen Bottum Up-Pulverfördermechanismus mit den Merkmalen des Anspruchs 1, eine PBLS-Anlage mit den Merkmalen des Anspruchs 5 sowie ein Verfahren mit den Merkmalen des Anspruchs 9 gelöst. In den abhängigen Ansprüchen sind vorteilhafte Ausgestaltungen der Erfindung angegeben.

Erfindungsgemäß wird ein verbesserter und insbesondere modular erweiterbarer Bottum Up-Pulverfördermechanismus für eine PBLS-Anlage, der einen als Pulverbehälter betriebenen Behälter mit einem nach Art eines Kolbens beweglichen Boden umfasst, um Pulver in Richtung einer dem Boden gegenüberliegenden oberen Öffnung des Behälters und/oder durch die obere Öffnung des Behälters und damit zu einer Arbeitsebene der PBLS-Anlage zu fördern, wobei der Bottum Up-Pulverfördermechanismus einen externen Behälter umfasst, der gasdicht verschließbar und gasdicht mit einer gasdichten Leitung verbunden ist, um über die Leitung Pulver aus dem Behälter in den als Pulverbehälter betriebenen Behälter leiten zu können, dadurch erreicht, dass der als Pulverbehälter betriebene Behälter in einer Seitenwand eine gegenüber der oberen Öffnung untere Öffnung aufweist, durch die der Behälter mit Pulver befüllbar ist und die mit der Leitung gasdicht und lösbar verbindbar ist, um schwerkraftgetrieben Pulver von dem oberhalb der Öffnung angeordneten externen Behälter durch die ein Gefälle aufweisende Leitung und durch die untere Öffnung in den als Pulverbehälter betriebenen Behälter leiten zu können. Aufgrund der in der Seitenwand vorgesehenen unteren Öffnung ist ein Befüllen des Behälters nicht mehr zwangsläufig über die obere Öffnung erforderlich, was zu verkürzten Rüst- und Nebenzeiten sowie einer entsprechenden Produktivitätssteigerung führt. Durch die gasdicht ausgebildete Leitung und deren gasdichte Verbindung mit der unteren Öffnung sowie dem gasdicht verschließbaren Behälter kann die Pulverbeladung auf einfache Weise zuverlässig und bei hoher Prozessstabilität auch im laufenden Betrieb der PBLS-Anlage und damit bei geschlossener Prozesskammer derselben durchgeführt werden. Dies ermöglicht aufgrund erhöhter Pulververfügbarkeit einen längeren ununterbrochenen Betrieb des Bottom Up-Pulverfördermechanismus und im gasdicht verschlossenen Zustand auch eine Pulverbeladung im laufenden Betrieb der PBLS-Anlage. Die Schutzgasatmosphäre in der Prozesskammer kann also während der Pulverbeladung mittels des erfindungsgemäßen Pulverfördermechanismus aufrechterhalten werden. Durch das Gefälle kann insbesondere bei einem oberhalb der Öffnung angeordneten externen Behälter eine selbsttätige Pulverbeladung durch automatisch nachrutschendes Pulver erfolgen, ohne dass zusätzliche Fördermechanismen wie beispielsweise Förderschnecken eingesetzt werden müssen, wie dies bei einem Fördern von Pulver entgegen der Schwerkraft erforderlich ist.

In vorteilhafter Weise ist außerdem vorgesehen, dass die Öffnung über einen Verschluss gasdicht verschließbar ist und geöffnet werden kann, um den Behälter durch die Öffnung mit Pulver zu befüllen. Durch den Verschluss kann beispielsweise während der Durchführung des PBLS-Verfahrens die Schutzgasatmosphäre im Behälter aufrechterhalten werden.

Außerdem ist in konstruktiv einfacher Weise vorgesehen, dass die Leitung als Rohr oder flexibler Schlauch ausgebildet ist.

In vorteilhafter Weise ist außerdem vorgesehen, dass der Bottum Up-Pulverfördermechanismus einen Verschlussmechanismus, vorzugsweise in Form eines Vakuumverschlusses, insbesondere in Form eines Scheibenventils, aufweist, der automatisch oder manuell verschließbar und öffenbar ist, um die Befüllung des Behälters mit Pulver durch die Öffnung zu regeln/zu steuern und der vorzugsweise in der Leitung und/oder der Öffnung angeordnet ist und insbesondere im laufenden Betrieb der PBLS-Anlage derart verschließbar und öffenbar ist, dass nur dann Pulver durch die Öffnung geleitet wird, wenn die Öffnung zwischen der Arbeitsebene und einer als Boden des Behälters dienenden Trägerplatte angeordnet ist. Hierdurch wird die Prozessstabilität zusätzlich erhöht, da die selbsttätige Pulverbeladung vom Verschlussmechanismus nur in entsprechend geeigneten Positionen der Trägerplatte zugelassen wird. Durch die Verwendung eines Vakuumverschlusses lässt sich außerdem das in Form der Leitung und des Behälters an die Prozesskammer angeschlossene Volumen, in dem die Schutzgasatmosphäre für eine Befüllung im laufenden Betrieb aufrechtzuerhalten ist, verringern. Wenn der Vakuumverschluss geschlossen ist, kann beispielsweise der externe Behälter geöffnet und/oder von der Leitung entfernt werden, um mit neuem Pulver nachgefüllt zu werden, und zugleich die anlagenseitige beziehungsweise behälterseitige Schutzgasatmosphäre in einem entsprechend kleineren Volumen aufrechterhalten werden.

Eine verbesserte und modular erweiterbare beziehungsweise umrüstbare PBLS-Anlage mit einem Bottom Up-Pulverfördermechanismus, wobei die PBLS-Anlage einen als Bauteilbehälter betriebenen ersten Behälter mit einem nach Art eines Kolbens beweglichen Boden und als Teil des Bottom Up-Pulverfördermechanismus einen als Pulverbehälter betriebenen Behälter mit einem nach Art eines Kolbens beweglichen Boden umfasst, wird dadurch erreicht, dass der Bottom Up-Pulverfördermechanismus gemäß einer der erfindungsgemäßen Ausgestaltungen ausgebildet ist. Durch den erfindungsgemäßen Bottom Up-Pulverfördermechanismus ist ein Öffnen der Prozesskammer der PBLS-Anlage zum Befüllen des Behälters über dessen in der Prozesskammer angeordnete obere Öffnung nicht mehr erforderlich, was zu verkürzten Rüst- und Nebenzeiten sowie einer entsprechenden Produktivitätssteigerung führt.

In vorteilhafter Weise ist außerdem vorgesehen, dass die PBLS-Anlage einen Auffangbehälter für überschüssiges Pulver aufweist, der eine obere Öffnung und vorzugsweise in einer Seitenwand eine gegenüber der oberen Öffnung untere Öffnung aufweist, die über einen Verschluss gasdicht verschließbar und öffenbar ist, wobei insbesondere der Auffangbehälter, dessen obere und untere Öffnung ausgebildet sind, um in einen Bottom Up-Pulverfördermechanismus gemäß einer der erfindungsgemäßen Ausgestaltungen umgerüstet zu werden, dessen Seitenwand von der Seitenwand des Auffangbehälters gebildet wird. Durch diesen Aufbau kann die PBLS-Anlage auf einfache Weise zwischen den unten beschriebenen Ausführungsformen umgerüstet und betrieben werden, wodurch in vorteilhafter Weise ein flexibler Einsatz der PBLS-Anlage entsprechend wechselnder Anforderungen möglich ist.

Erfindungsgemäß wird eine verbesserte und modular erweiterbare beziehungsweise umrüstbare PBLS-Anlage mit einem Bottom Up-Pulverfördermechanismus, wobei die PBLS-Anlage einen als Bauteilbehälter betriebenen ersten Behälter mit einem nach Art eines Kolbens beweglichen Boden und als Teil des Bottom Up-Pulverfördermechanismus einen als Pulverbehälter betriebenen Behälter mit einem nach Art eines Kolbens beweglichen Boden umfasst, sowie einen Auffangbehälter für überschüssiges Pulver umfasst, wobei der Auffangbehälter eine obere Öffnung aufweist, dadurch erreicht, dass der Auffangbehälter in einer Seitenwand eine gegenüber der oberen Öffnung untere Öffnung aufweist, die vorzugsweise über einen Verschluss gasdicht verschließbar und öffenbar ist, wobei insbesondere der Auffangbehälter, dessen obere und untere Öffnung ausgebildet sind, um in einen Bottom Up-Pulverfördermechanismus gemäß einer der erfindungsgemäßen Ausgestaltungen umgerüstet zu werden, dessen Seitenwand von der Seitenwand des Auffangbehälters gebildet wird. Durch den erfindungsgemäßen Aufbau kann die PBLS-Anlage auf einfache Weise zwischen den unten beschriebenen Ausführungsformen umgerüstet und betrieben werden, wodurch in vorteilhafter Weise ein flexibler Einsatz der PBLS-Anlage entsprechend wechselnder Anforderungen möglich ist.

Die Produktivität der PBLS-Anlage lässt sich dadurch steigern, dass die PBLS-Anlage einen als Bauteilbehälter betriebenen zweiten Behälter mit einem nach Art eines Kolbens beweglichen Boden aufweist und die PBLS-Anlage als Multiscannereinheit ausgebildet ist.

Erfindungsgemäß wird ein verbessertes Verfahren zum Umrüsten und Betreiben einer PBLS-Anlage mit einem Bottom Up-Pulverfördermechanismus, wobei die PBLS-Anlage in einer ersten Ausführungsform als Einscannereinheit oder als Multiscannereinheit betrieben wird und einen als Bauteilbehälter betriebenen ersten Behälter mit einem nach Art eines Kolbens beweglichen Boden und als Teil des Bottom Up-Pulverfördermechanismus einen als Pulverbehälter betriebenen zweiten Behälter mit einem nach Art eines Kolbens beweglichen Boden sowie einen Auffangbehälter für überschüssiges Pulver umfasst, wobei der Auffangbehälter eine obere Öffnung aufweist, dadurch erreicht, dass mit dem Auffangbehälter ein dritter Behälter mit einem nach Art eines Kolbens beweglichen Boden als Teil eines gleichartigen neuen Bottom Up-Pulverfördermechanismus gebildet wird, indem über die obere Öffnung eine Trägerplatte als beweglicher Boden in den Auffangbehälter eingesetzt wird, und dass ein Antrieb, vorzugsweise in Form eines elektromechanischen Hubzylinders, Kugelgewindetriebes, Riementriebes, pneumatischen oder hydraulischen Antriebs, zwischen einem unbeweglichen Boden des Auffangbehälters und der Trägerplatte angeordnet wird, um die Trägerplatte nach Art eines Kolbens anheben oder absenken zu können. Durch das erfindungsgemäße Verfahren kann die PBLS-Anlage auf einfache Weise zwischen den unten beschriebenen Ausführungsformen umgerüstet und betrieben werden, wodurch in vorteilhafter Weise ein flexibler Einsatz der PBLS-Anlage entsprechend wechselnder Anforderungen möglich ist. Hierdurch kann auf einfache Weise eine Umrüstung zwischen den unten beschriebenen Ausführungsformen erfolgen.

In vorteilhafter Weise ist außerdem vorgesehen, dass der zweite Behälter in einer zweiten Ausführungsform der PBLS-Anlage neben dem ersten Behälter als zusätzlicher Bauteilbehälter betrieben wird und hierfür die PBLS-Anlage als Multiscannereinheit betrieben wird. Dadurch lässt sich die Produktivität der PBLS-Anlage weiter steigern, da parallel Bauteile mit verschiedenen Schichtdicken hergestellt werden können.

In vorteilhafter Weise ist außerdem vorgesehen, dass in einer Arbeitsebene der PBLS-Anlage, die insbesondere zumindest teilweise von einem Kammerboden einer Prozesskammer der PBLS-Anlage gebildet wird, eine Ausnehmung vorgesehen ist, die von einer sich an die Arbeitsebene anschließenden Wand gebildet wird, und dass in der Ausnehmung wahlweise der erste Behälter und der zweite Behälter angeordnet werden, wobei deren Seitenwand vorzugsweise jeweils von einem Abschnitt der Wand und von einem in der Ausnehmung angeordneten Trenneinsatz gebildet wird, der die beiden Behälter voneinander beabstandet und vorzugsweise lösbar in der Ausnehmung befestigt wird, und wobei die PBLS-Anlage als Multiscannereinheit betrieben wird, oder dass alternativ in einer dritten Ausführungsform der in der ersten beziehungsweise zweiten Ausführungsform als Pulverbehälter betriebene dritte Behälter zu einem zweiten Behälter der PBLS-Anlage wird, indem der Trenneinsatz aus der Ausnehmung herausgenommen wird und in der Ausnehmung nur ein gegenüber der ersten und zweiten Ausführungsform größerer erster Behälter angeordnet und als Bauteilbehälter betrieben wird, wobei dessen Seitenwand vorzugsweise von der die Ausnehmung begrenzenden Wand gebildet wird. Auf diese Weise ist ein besonders flexibler Einsatz der PBLS-Anlage möglich, so dass insbesondere ein einfaches Umrüsten zwischen der zweiten und der dritten Ausführungsform möglich ist. Auch bei einer einzigen, entsprechend größeren Bauplattform in der Ausnehmung können von einem Multiscannersystem parallel mehrere Bauteile oder ein verhältnismäßig großes Bauteil hergestellt werden. Hierdurch kann je nach Anzahl und Größe der Bauplattformen beziehungsweise der vorgesehenen Laser eine erhebliche Produktivitätssteigerung erreicht werden.

Nachfolgend wird ein Ausführungsbeispiel der Erfindung an Hand der Zeichnungen näher erläutert. Es zeigen:
Figur 1 eine schematische Darstellung einer PBLS-Anlage in einer ersten Ausführungsform mit vollständig geöffneter Prozesskammer,
Figur 1a eine Seitenansicht der PBLS-Anlage gemäß Figur 1 mit vollständig geschlossener Prozesskammer
Figur 1b eine Ansicht einer Innenseite des Deckels der Prozesskammer der PBLS-Anlage gemäß Figur 1,
Figur 1c eine Ansicht einer Pulverauftragseinheit in ihrer Arbeitsposition bei vollständig geschlossener Prozesskammer,
Figur 2 eine schematische Darstellung einer PBLS-Anlage in einer zweiten Ausführungsform,
Figur 2a eine Ansicht von zwei Behältern und
Figur 3 eine schematische Darstellung einer PBLS-Anlage in einer dritten Ausführungsform.

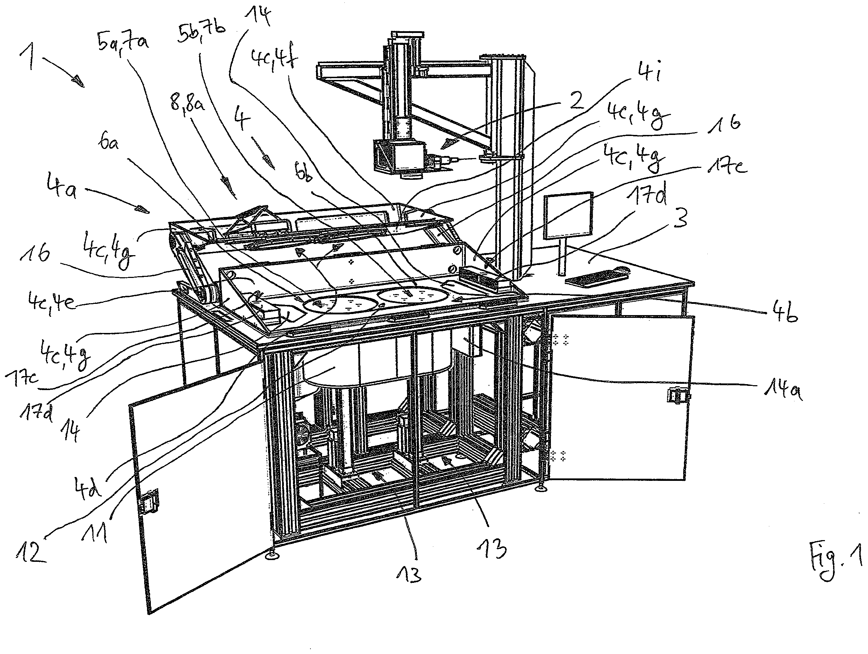

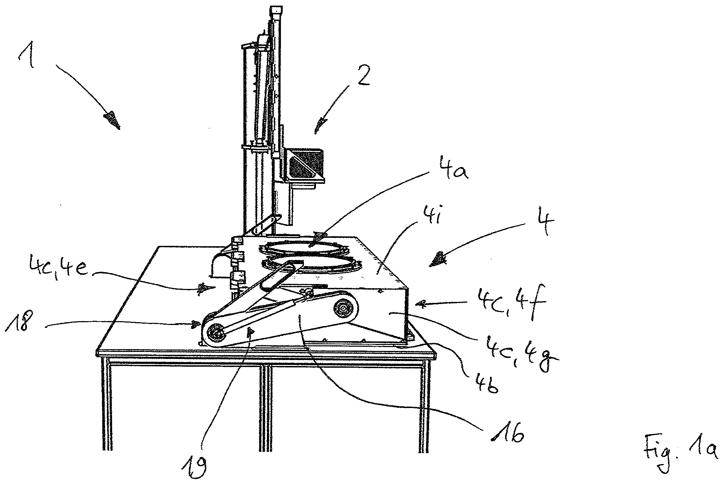

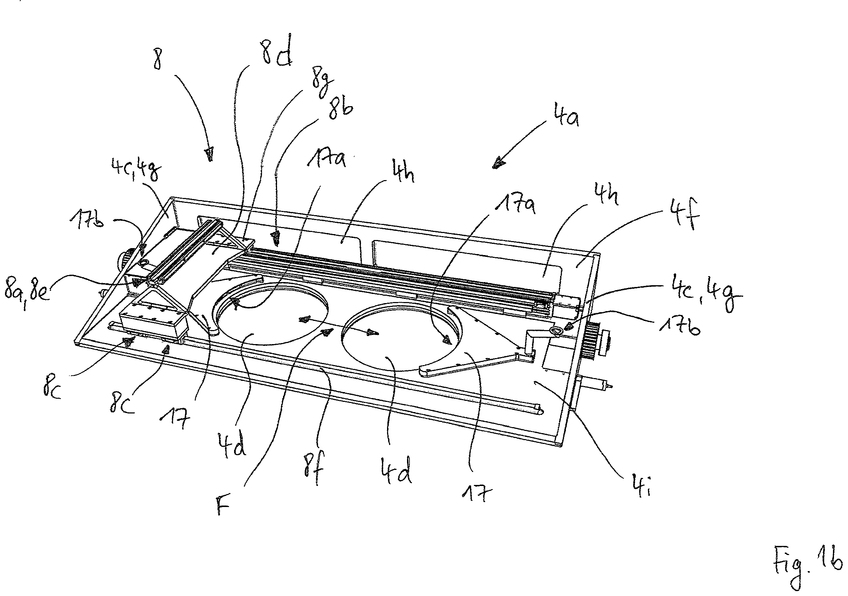

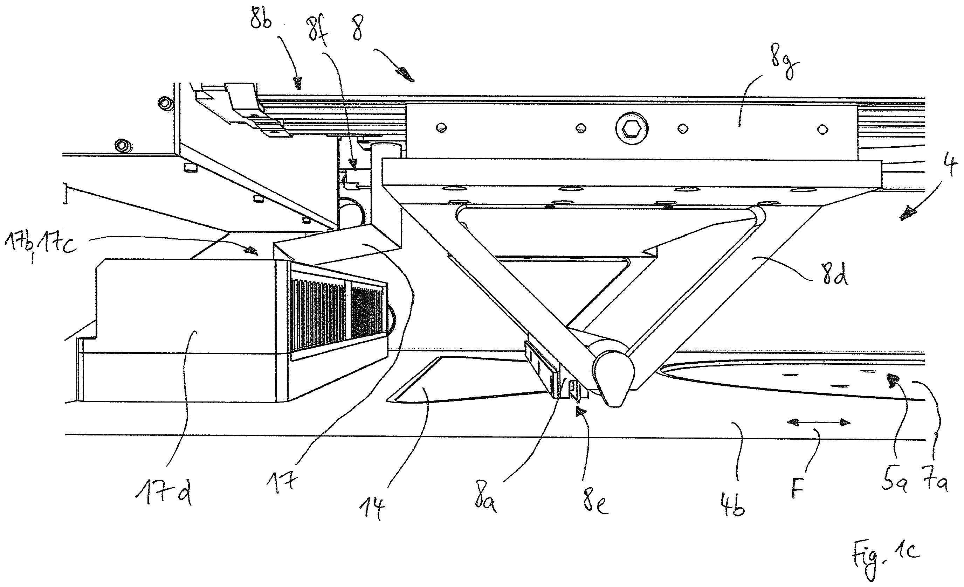

Die Figur 1 zeigt eine schematische Darstellung einer PBLS-Anlage 1 mit einem Bottom Up-Pulverfördermechanismus in einer ersten Ausführungsform, die einer modular erweiterbaren beziehungsweise umrüstbaren Basis-Ausführung entspricht. Die PBLS-Anlage 1 ist in der ersten Ausführungsform als so genanntes Einscannersystem ausgebildet und umfasst dementsprechend nur eine Scannereinheit 2 mit einem Laser. Grundsätzlich ist die PBLS-Anlage 1 jedoch nicht auf Laser beschränkt, da anstelle eines Lasers auch eine andere Einrichtung verwendet werden kann, die eine zum selektiven Aufschmelzen des jeweiligen Werkstoffs geeignete elektromagnetische Strahlung erzeugen kann, beispielsweise Electron Beam Melting (EBM). Außerdem weist die PBLS-Anlage 1 einen gestellartigen Tisch 3 auf, der eine gehäuseartig ausgebildete Prozesskammer 4 trägt. Die Prozesskammer 4 hat einen im Wesentlichen kastenförmigen beziehungsweise quaderförmigen Aufbau mit einer als bewegbarer Deckel 4a ausgebildeten Kammerdecke 4i, einem Kammerboden 4b und vier Seitenwänden 4c. Die vier Seitenwände 4c sind dementsprechend jeweils rechteckförmig ausgebildet und werden gebildet von einer Rückwand 4e, einer dieser gegenüberliegenden Vorderwand 4f (siehe Figur 1b) und zwei Stirnwänden 4g. An ihrer Unterseite ist die Prozesskammer 4 über den Kammerboden 4b mit dem Tisch 3 verbunden. Der Deckel 4a umfasst zumindest die Kammerdecke 4i und ist zum Öffnen oder Verschließen der Prozesskammer 4 relativ zu dem Kammerboden 4b sowie zu dem Tisch 3 zwischen einer in den Figuren 1, 2 und 3 dargestellten offenen und einer in den Figuren 1a und 1c dargestellten geschlossenen Position bewegbar. Der Deckel 4a dient somit in der geschlossenen Position zum Verschließen der Prozesskammer 4 in ihrem oberen Bereich beziehungsweise in der offenen Position dazu, dass die Prozesskammer 4 von oben zugänglich ist. In diesem Sinne ist der Deckel 4a nicht mit einer etwaigen Seitentür an einer der Seitenwände 4c gleichzusetzen.

Um das PBLS-Verfahren durchführen zu können, muss der Deckel 4a in der geschlossenen Position sein. Nur dann ist die Prozesskammer 4 gasdicht gegenüber ihrer Umgebung verschlossen, so dass wie eingangs beschrieben über eine nicht dargestellte Schutzgaszuführung die zur Durchführung des PBLS-Verfahrens erforderliche Schutzgasatmosphäre in der Prozesskammer 4 hergestellt und aufrechterhalten werden kann.

Über den Tisch 3 kann die PBLS-Anlage 1 auf einem Boden aufgestellt werden. Die vollständig, insbesondere einschließlich der optischen Komponenten zur definierten Einkopplung der Laserstrahlung, außerhalb der Prozesskammer 4 angeordnete Scannereinheit 2 kann mit dem Tisch 3 verbunden sein und sicher hieran abstützen und/oder wie in Figur 1 angedeutet separat auf dem Boden aufgeständert sein. Außerdem ist die Scannereinheit 2 oberhalb der Prozesskammer 4 und/oder neben die Prozesskammer 4 verschwenkbar und umgekehrt für den laufenden Betrieb der PBLS-Anlage 1 über die Prozesskammer 4 zurück verschwenkbar. Der Laserstrahl der entsprechend zurück geschwenkten und somit über der Prozesskammer 4 angeordneten Scannereinheit 2 wird dann über eines von zwei im Deckel 4a beziehungsweise der Kammerdecke 4i vorgesehenen Einkoppelgläsern 4d in die Prozesskammer 4 eingekoppelt und zu den ausgewählten Bereichen im Bereich der aufzuschmelzenden Pulverschicht geführt. Die PBLS-Anlage 1 kann jedoch nicht nur als Einscannersystem mit einer Scannereinheit 2, sondern auch als Multiscannersystem, insbesondere als Zweiscannersystem mit zwei Scannereinheit 2, ausgebildet sein. Dementsprechend muss zumindest ein weiterer Laserstrahl über eines der Einkoppelgläser 4d in die Prozesskammer eingekoppelt werden, wobei auch mehrere Laserstrahlen durch ein Einkoppelglas 4d eingekoppelt werden können.

Innerhalb der Prozesskammer 4 ist eine sich horizontal erstreckende Arbeitsebene angeordnet, die im Wesentlichen von dem Kammerboden 4b beziehungsweise dessen Oberfläche gebildet und rechteckförmig durch die Seitenwände 4c begrenzt wird.

In der Prozesskammer 4, das heißt in einem von der geschlossenen Prozesskammer 4 umschlossenen Raum, ist außerdem eine Pulverauftragseinheit 8 mit einem über einen stabförmigen Schieber 8a parallel zur Arbeitsebene beweglichen Auftragsmedium in Form einer Bürste 8e angeordnet. Die Pulverauftragseinheit 8 ist an einer Innenseite des Deckels 4a befestigt (siehe auch Figur 1b) und dadurch beim Öffnen der Prozesskammer 4 gemeinsam mit dem Deckel 4a zwischen der offenen Position (siehe Figuren 1, 2 und 3) und der geschlossenen Position (siehe Figur 1a) bewegbar. Die Pulverauftragseinheit 8 ist hierbei in der geschlossenen Position des Deckels 4a und insbesondere im laufenden Betrieb der PBLS-Anlage 1 so angeordnet, dass der Schieber 8a oberhalb der Arbeitsebene und parallel hierzu in einer Fahrtrichtung F hin und her verfahrbar ist (siehe Figur 1c), um mittels des am Schieber 8a befestigten Auftragsmediums auf der Bauplattform sowie der hiervon getragenen Substratplatte der PBLS-Anlage 1 einen gleichmäßigen Pulverauftrag zu verwirklichen. Die geschlossene Position des Deckels 4a entspricht einer Arbeitsposition der Pulverauftragseinheit 8, wobei die Pulverauftragseinheit 8 von dem Deckel 4a in Richtung des Kammerbodens 4b herabhängt. Aufgrund der Befestigung der Pulverauftragseinheit 8 am Deckel 4a ist keine Befestigung am Kammerboden 4b vorgesehen, so dass dieser frei von Komponenten der Pulverauftragseinheit 8 ist. Der in Form von Pulver vorliegende Werkstoff zur Herstellung eines Bauteils wird dem Auftragsmedium hierfür von einem unten näher beschriebenen Bottom Up-Pulverfördermechanismus im Bereich der Arbeitsebene bereitgestellt. Weitere Details zur Prozesskammer 4 und der Pulverauftragseinheit 8 werden unten näher beschrieben.

Zwischen ihren beiden Enden wird die Arbeitsebene nicht ausschließlich vom Kammerboden 4b gebildet, da im Kammerboden 4b und damit auch in der Arbeitsebene drei in Fahrtrichtung F gesehen nebeneinander und voneinander beabstandet angeordnete Ausnehmungen vorgesehen sind.

An die beiden äußeren Ausnehmungen schließt sich unterhalb der Arbeitsebene jeweils ein als Pulverüberlauf für überschüssiges Pulver dienender und lösbar befestigter Auffangbehälter 14 an. Die entsprechende Ausnehmung wird jeweils durch eine obere Öffnung des Auffangbehälters 14 beziehungsweise eine sich zu deren Ausbildung zumindest mit ihrer Innenseite rechtwinklig von der Arbeitsebene nach unten erstreckende Seitenwand 14a des Auffangbehälters 14 oder durch ein entsprechend ausgebildetes Zwischenstück begrenzt, das die Ausnehmung mit dem Auffangbehälter 14 beziehungsweise dessen oberer Öffnung verbindet. Von den Auffangbehältern 14 ist jeweils einer an einem der gegenüberliegenden Enden der Arbeitsebene angeordnet, zwischen denen der Schieber 8a mit dem Auftragsmedium in der geschlossenen Position des Deckels 4a verfährt. Die Grundflächen der Auffangbehälter 14 sind im Wesentlichen trapezförmig ausgebildet. Hierbei erstrecken sich die entsprechend länglichen und schmalen Grundflächen mit ihrer Längserstreckung jeweils quer zur Fahrtrichtung F und damit parallel zur Längserstreckung des Auftragsmediums und des Schiebers 8a.

An die innere der drei Ausnehmungen schließt sich unterhalb der Arbeitsebene eine umlaufende Wand 11 an, deren Innenseite rechtwinklig zur Arbeitsebene und hiervon weg verläuft. Die erste Ausnehmung wird durch die Wand 11 begrenzt. Im Bereich der inneren ersten Ausnehmung sind ein erster Behälter 5a und ein zweiter Behälter 5b im eingangs beschriebenen Sinne angeordnet und hierbei zumindest teilweise von der Wand 11 umschlossen. Dadurch schließen sich beide Behälter 5a, 5b mit ihren oberen Öffnungen über die innere Ausnehmung an die Arbeitsebene an, wodurch sie beide der inneren Ausnehmung zugeordnet sind. Beide Behälter 5a und 5b sind gleichartig aufgebaut und umfassen hierbei eine erste beziehungsweise zweite Seitenwand 6a beziehungsweise 6b. Innerhalb jeder Seitenwand 6a, 6b ist eine der entsprechenden oberen Öffnung gegenüberliegende erste beziehungsweise zweite Trägerplatte 7a beziehungsweise 7b nach Art eines Kolbens eingepasst und beweglich angeordnet, um den entsprechenden Boden des Behälters 5a, 5b zu bilden. Die Behälter 5a, 5b weisen jeweils eine Grundfläche auf. Entsprechend der Grundfläche ist die jeweilige Seitenwand 6a, 6b und der von der Trägerplatte 7a, 7b gebildete Boden ausgebildet. Vorliegend sind die Seitenwände 6a, 6b zylinderförmig ausgebildet, so dass die Behälter 5a, 5b eine Art Zylinder-Kolben-Einheit ausbilden.

Die Wand 11 ist außerdem Bestandteil der beiden Behälter 5a, 5b, indem sie jeweils einen ersten Abschnitt von deren Seitenwänden 6a, 6b bildet. Innerhalb der Wand 11 ist ein Trenneinsatz 12 derart eingesetzt und lösbar befestigt, dass der erste Abschnitt der jeweiligen Seitenwand 6a beziehungsweise 6b durch einen von dem Trenneinsatz 12 gebildeten zweiten Abschnitt vervollständigt wird. Dadurch ist die Seitenwand 6a, 6b jedes Behälters 5a, 5b teilweise von dem entsprechenden Abschnitt der Wand 11 sowie von der diesem Abschnitt zugewandten Seite des Trenneinsatzes 12 zusammengesetzt und die beiden Seitenwände 6a, 6b sind über den Trenneinsatz 12 miteinander verbunden. Außerdem erstreckt sich der Trenneinsatz 12 zwischen den Behältern 5a, 5b innerhalb der inneren Ausnehmung auf Höhe der Arbeitsebene, wodurch er einen Teil der Arbeitsebene ausbildet und zugleich die beiden Behälter 5a, 5b voneinander beabstandet und trennt.

Die Behälter 5a, 5b können durch eine entsprechende Ausbildung der inneren Ausnehmung beziehungsweise der diese Ausnehmung begrenzenden Wand 11 sowie des Trenneinsatzes 12, eine runde, insbesondere wie in Figur 1 dargestellt eine kreisrunde oder auch ovale Grundfläche aufweisen. Alternativ sind jedoch auch Behälter 5a, 5b mit eckigen oder rechteckigen Grundflächen denkbar oder mit Grundflächen, die sowohl runde als auch gerade Seitenkanten aufweisen. Die Seitenwände 6a, 6b sowie die Trägerplatten 7a, 7b sind entsprechend der Grundfläche ausgebildet und in die Trägerplatten 7a, 7b sind zudem in die jeweiligen Seitenwände 6a, 6b eingepasst, um ihre oben beschriebene Funktion als Kolben beziehungsweise beweglicher Boden zu erfüllen. Hierbei erstrecken sich die Trägerplatten 7a, 7b mit ihrer Oberfläche jeweils entsprechend der Grundfläche parallel zur Arbeitsebene und rechtwinklig zu den Seitenwänden 6a, 6b. Auch ist es denkbar, dass zwei separate Behälter 5a, 5b vorgesehen werden, ohne dass zur Ausbildung von deren Seitenwänden 6a, 6b beziehungsweise deren rechtwinklig zur Arbeitsebene verlaufenden Innenseiten ein Trenneinsatz 12 erforderlich ist. Zudem müssen die Behälter 5a, 5b nicht in einer gemeinsamen Ausnehmung angeordnet sein. Darüber hinaus müssen die Grundflächen der Behälter 5a, 5b nicht wie in den vorliegenden Ausführungsbeispielen identisch ausgebildet sein, sondern auch ungleiche und ungleich große Grundflächen sind denkbar. Üblicherweise ist jedoch die Grundfläche jedes Auffangbehälters 14 kleiner als die Grundfläche des als Bauteilbehälter betriebenen ersten Behälters 5a.

Die Trägerplatten 7a, 7b sind über schematisch dargestellte Antriebe 13, die beispielsweise als elektromechanische Hubzylinder, Kugelgewindetriebe, Riementriebe, pneumatische oder hydraulische Antriebe ausgebildet sind, innerhalb des jeweiligen Behälters 5a, 5b beziehungsweise deren Seitenwänden 6a, 5b in einer rein translatorischen beziehungsweise linearen Bewegung in bezüglich der Arbeitsebene senkrechter Richtung mit der nötigen Genauigkeit zur Generierung der gewünschten Schichtdicke heb- und senkbar.

Die erste Trägerplatte 7a dient als Bauplattform und wird während der Durchführung des PBLS-Verfahrens wie eingangs beschrieben gemeinsam mit der nicht dargestellten Substratplatte ausgehend von einer Ausgangslage abgesenkt, wobei das zu fertigende Bauteil und das Pulverbett auf der ersten Trägerplatte 7a beziehungsweise der darauf befestigten Substratplatte aufgebaut und hiervon innerhalb des Behälters 5a getragen werden. Um die Substratplatte an der Trägerplatte 7a anschrauben zu können, weist die Trägerplatte 7a entsprechende Bohrungen auf. Der zweite Behälter 5b ist Teil des Bottom Up-Pulverfördermechanismus und dient hierbei auch als Vorratsbehälter für Pulver, wobei die zweite Trägerplatte 7b während der Durchführung des PBLS-Verfahrens wie eingangs beschrieben in Richtung der Arbeitsebene angehoben wird, um Pulver zur Arbeitsebene zu fördern, das unterhalb der Arbeitsebene in dem zweiten Behälter 5b bevorratet ist. Durch umgekehrtes Absenken der zweiten Trägerplatte 7b wird das Volumen des zweiten Behälters 5b vergrößert, um eine entsprechende Menge neuen Pulvers aufnehmen und bevorraten zu können. Die Menge des aufnehmbaren Pulvers ist hierbei begrenzt durch das Volumen des zweiten Behälters 5b bei maximal abgesenkter Trägerplatte 7b entsprechend der maximalen Hubhöhe. In Figur 1 sind die beiden Trägerplatten 7a, 7b jeweils in einer angehobenen Position im Bereich der Arbeitsebene dargestellt.

Zur Beladung beziehungsweise Befüllung der PBLS-Anlage 1 mit pulverförmigem Werkstoff kann ein derartiger Bottom Up-Pulverfördermechanismus beziehungsweise dessen Behälter durch seine obere Öffnung und die zugehörige Ausnehmung in der Arbeitsebene befüllt werden. Hierfür ist die Prozesskammer 4 zu öffnen, so dass bei einer derartigen Pulverbeladung keine Schutzgasatmosphäre in der Prozesskammer 4 aufrechterhalten werden kann und insbesondere Sauerstoff in die Prozesskammer 4 gelangt.

Insbesondere wegen der gegenüber der relativen Bauteildichte geringen relativen Schüttdichte führt das Verdichten jeder Pulverschicht dazu, dass die Höhe des fertigen Bauteils etwa der halben kumulierten Höhe aller hierfür aufzutragenden Pulverschichten entspricht. Bei identischem Volumen der Behälter 5a, 5b, das heißt bei gleicher Grundfläche und gleicher maximaler Hubhöhe der den jeweiligen Boden bildenden Trägerplatte 7a, 7b, kann daher mit einem maximal gefüllten Behälter 5b kein Bauteil mit einer der maximalen Hubhöhe entsprechenden Bauteilhöhe hergestellt werden, so dass eine Unterbrechung des PBLS-Verfahrens und ein Öffnen der Prozesskammer 4 erforderlich ist, um eine neue Pulverbeladung des zweiten Behälters 5b durchzuführen.

Dadurch, dass die Behälter 5a, 5b und die Auffangbehälter 14 über die jeweilige Ausnehmung im Kammerboden 4b mit der Prozesskammer 4 verbunden sind, ist bei der Durchführung des PBLS-Verfahrens die Schutzgasatmosphäre auch dort aufrechtzuerhalten und die jeweilige Verbindung entsprechend gasdicht ausgebildet. Auch die Behälter 5a, 5b sowie die Auffangbehälter 14 selbst sind gasdicht gegenüber ihrer Umgebung ausgebildet.

In der Figur 1a ist eine Seitenansicht der PBLS-Anlage 1 gemäß Figur 1 mit vollständig geschlossener Prozesskammer 4 dargestellt. Ausgehend von der Figur 1, in der der Deckel 4a in der offenen Position abgebildet ist und mit seiner Innenseite schräg nach oben und von der PBLS-Anlage 1 und insbesondere vom Kammerboden 4b weg zeigt, wurde der Deckel 4a gemeinsam mit der an der Innenseite befestigten Pulverauftragseinheit 8 in die geschlossene Position bewegt. Um den Deckel 4a in die in Figur 1a gezeigte geschlossene Position sowie zurück in die offene Position bewegen zu können, ist der Deckel 4a entsprechend bewegbar, insbesondere gelenkig und somit schwenkbar, gelagert. Hierfür umfasst die PBLS-Anlage 1 einen Schwenkmechanismus, zwischen dessen beiden Schwenkarmen 16 (siehe auch Figur 1) der Deckel 4a und damit auch die Pulverauftragseinheit 8 drehbar gelagert ist. Über einen vorzugsweise formschlüssigen Zugmitteltrieb 18, beispielsweise in Form eines Zahnriementriebs oder Kettengetriebes, und/oder eine Krafteinrichtung 19, beispielsweise in Form eines Federelements, vorzugsweise in Form einer Gasdruckfeder, eines hydraulischen oder pneumatischen Antriebs, insbesondere Hubzylinders, oder eines linear wirkenden elektrischen Antriebs, die jeweils an dem Deckel 4a und an einem Festpunkt der PBLS-Anlage 1 angreifen, kann der Deckel 4a manuell oder automatisch zwischen der offenen und der geschlossenen Position verschwenkt werden.

Die Figur 1b zeigt eine Ansicht einer Innenseite des Deckels 4a der Prozesskammer 4 der PBLS-Anlage 1. An der dargestellten Innenseite des Deckels 4a ist die Pulverauftragseinheit 8 an der Kammerdecke 4i befestigt. Außerdem ist die gesamte Vorderwand 4f an der Kammerdecke 4i befestigt, um den Deckel 4a zu bilden und gemeinsam zwischen der offenen und der geschlossenen Position bewegbar zu sein. Dadurch ist die Vorderwand 4f nur in der geschlossenen Position mit dem Kammerboden 4b und den übrigen angrenzenden Seitenwänden 4c verbunden und in allen anderen Positionen hiervon beabstandet. Dementsprechend ist der Kammerboden 4b insbesondere in der offenen Position im entsprechenden Bereich auf Höhe der Arbeitsebene kantenfrei und damit barrierefrei zugänglich. Dies ermöglicht eine besonders einfache Reinigung der Prozesskammer 4.

Zusätzlich ist jede Stirnwand 4g zweigeteilt, von denen jeweils ein Teil ebenfalls als Teil des Deckels 4a an der Kammerdecke 4i befestigt ist. Die hierzu komplementären am Kammerboden 4b befestigten Teile der Stirnwände 4g (siehe Figur 1) flachen ausgehend von der Rückwand 4e ab. Beide Teile bilden in der geschlossenen Position eine vollständige rechteckförmige Stirnwand 4g (siehe Figur 1a). Außerdem ist zumindest ein Sichtfenster 4h in einer der Seitenwände 4c angeordnet, beispielsweise wie in Figur 1b gezeigt zwei Sichtfenster 4h in der Vorderwand 4f, durch die in der geschlossenen Position in die Prozesskammer 4 hinein gesehen werden kann.

Um beim PBLS-Verfahren entstehendes Rauchgas, das insbesondere Rußpartikel des aufgeschmolzenen Pulvers enthält und die in die Prozesskammer 4 eingekoppelte Laserstrahlung schwächt, zuverlässig absaugen zu können, ist eine zweigeteilte Rauchgasabsaugung vorgesehen. Die Rauchgasabsaugung ist Teil eines Filtersystems zur Filterung eines das Rauchgas der PBLS-Anlage 1 enthaltenden und durch die PBLS-Anlage 1 geführten Volumenstroms. Innerhalb der Prozesskammer 4 wird der Volumenstrom in einen entlang der Einkoppelgläser 4d geführten ersten Volumenstrom und einen entlang der Arbeitsebene geführten zweiten Volumenstrom aufgeteilt. Beide Volumenströme sind zumindest im Bereich der Einkoppelgläser 4d beziehungsweise des Kammerbodens 4b möglichst homogen und laminar sowie zueinander parallel ausgebildet. Hierfür ist in Fahrtrichtung F gesehen an gegenüberliegenden Enden der Prozesskammer 4 am Kammerboden 4b jeweils eine Leiste 17d (siehe Figur 1) der Rauchgasabsaugung vorgesehen.

Ein für den ersten Volumenstrom am Deckel 4a befestigter erster Teil der Rauchgasabsaugung umfasst für jedes Einkoppelglas 4d einen flachen und trichterförmig ausgebildeten Kanal 17, der ausgehend von einer an dem entsprechenden Einkoppelglas 4d angeordneten ersten Öffnung 17a entlang des Deckels 4a in Richtung der Stirnwand 4g verläuft. Hierbei erstreckt sich die Öffnung 17a in etwa über die Breite des Einkoppelglases 4d. In Richtung der Stirnwand 4g verjüngt sich der Kanal 17, verläuft anschließend rohrförmig, insbesondere rechtwinklig, vom Deckel 4a weg und endet mit einer zweiten Öffnung 17b. Sämtliche am Deckel 4a befestigten Komponenten der Rauchgasabsaugung sind außerhalb des Bewegungsbereichs der Pulverauftragseinheit 8 angeordnet, wobei der trichterförmige Bereich des Kanals 17 zwischen dem Deckel 4a und den in Fahrtrichtung F beweglichen Komponenten der Pulverauftragseinheit 8 angeordnet ist. Zwischen den beiden Öffnungen 17a verläuft der erste Volumenstrom außerhalb des Kanals 17 und parallel zur Kammerdecke 4i durch die Prozesskammer 4, um Rauchgas aus dem Bereich der Einkoppelgläser 4d aus der Prozesskammer 4 abzuführen. Die Rauchgasabsaugung im Bereich der Einkoppelgläser 4d ist wichtig, um zu verhindern, dass diese durch rauchgasbedingte Ablagerungen verschmutzt werden und die Leistung des eingekoppelten Laserstrahls mindern oder dass diese durch erhöhte Absorption der Laserstrahlung am Schmutz aufgrund hiermit einhergehender starker lokaler Erhitzung zerstört werden.

Ein für den zweiten Volumenstrom vorgesehener zweiter Teil der Rauchgasabsaugung wird von zwei einander zugewandten Einmündungen gebildet, von denen jeweils eine in einer der beiden Leisten 17d ausgebildet ist. Zwischen den beiden Einmündungen wird der zweite Volumenstrom im Bereich des Kammerbodens 4b durch die Prozesskammer 4 geführt, um auch Rauchgas aus dem Bereich der Arbeitsebene aus der Prozesskammer 4 abzuführen.

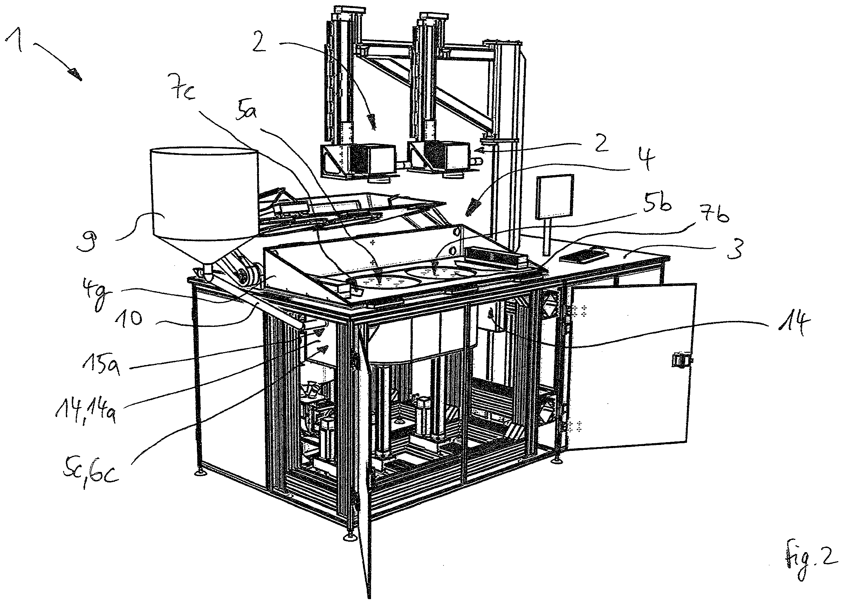

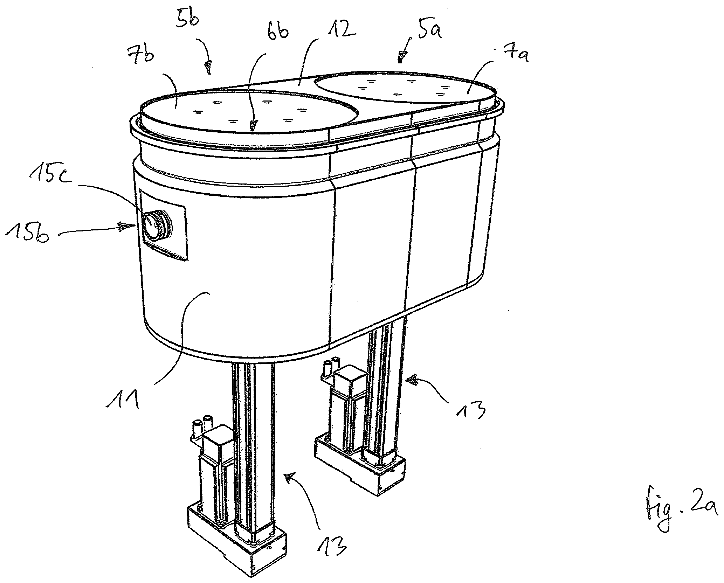

Um den in die Prozesskammer 4 geführten Volumenstrom aufzuteilen beziehungsweise die beiden Volumenströme wieder zu einem gemeinsam durch das Filtersystem geführten Volumenstrom zu vereinigen, weist jede Leiste 17d eine dritte Öffnung 17c auf, die bei geschlossenem Deckel 4a mit der zweiten Öffnung 17b des rohrförmigen Teils des Kanals 17 zusammentrifft (siehe Figur 2). Der Volumenstrom wird von derjenigen Leiste 17d in die Prozesskammer 4 eingeströmt und getrennt, die vom Bauteilbehälter weiter entfernt angeordnet ist. Von der näher am Bauteilbehälter angeordneten Leiste 17d werden die beiden Volumenströme wieder zusammengeführt und aus der Prozesskammer 4 heraus geführt, um gefiltert zu werden. Nach dem Filtern wird der gefilterte Volumenstrom über die Einmündung der anderen Leiste 17d zurück in die Prozesskammer 4 geführt und entsprechend aufgeteilt.

Die Pulverauftragseinheit 8 umfasst neben dem Schieber 8a für das Auftragsmedium auch eine lineare Antriebseinheit 8b mit einem Motor. Die Antriebseinheit 8b ist vorzugsweise vollständig an der Kammerdecke 4i, gegebenenfalls auch teilweise an einer oder mehreren hieran befestigten Seitenwänden 4c, befestigt und erstreckt sich schienenförmig in Fahrtrichtung F und hierbei vorzugsweise parallel zu einer von der Kammerdecke 4i gebildeten Ebene sowie vorzugsweise auch parallel zur Vorderwand 4f. Sowohl der Schieber 8a als auch das Auftragsmedium erstrecken sich in der geschlossenen Position des Deckels 4a mit ihrer Längserstreckung parallel zur Arbeitsebene und im Wesentlichen quer, insbesondere rechtwinklig, zur Fahrtrichtung F. Über einen von der Antriebseinheit 8b angetriebenen Antriebsschlitten 8g ist eine Traverse 8d, an der der Schieber 8a mit dem Auftragsmedium gelagert ist, in der Fahrtrichtung F zwischen gegenüberliegenden Enden des Deckels 4a, die von den beiden Stirnwänden 4g beziehungsweise deren mit der Kammerdecke 4i verbundenen Teile gebildet werden, translatorisch hin und her verfahrbar. Hierbei ist die Traverse 8d mit einem ihrer beiden Enden mit dem Antriebsschlitten 8g und mit dem gegenüberliegenden anderen Ende zur Aufnahme von Querkräften mit zwei Führungswagen 8c verbunden. Die zwei Führungswagen 8c sind hierfür in festem Abstand in Fahrtrichtung F hintereinander angeordnet und entlang einer als Führung dienenden und sich geradlinig im Sinne einer Linearführung erstreckenden Führungsschiene 8f verfahrbar. Die Führungsschiene 8f ist analog zur Antriebseinheit 8b an der Kammerdecke 4i befestigt und erstreckt sich von der Antriebseinheit 8b beabstandet und parallel hierzu sowie vorzugsweise parallel zu der von der Kammerdecke 4i gebildeten Ebene. Dadurch ist die Fahrtrichtung F in jeder Position des Deckels 4a beziehungsweise der Pulverauftragseinheit 8 parallel zu der von der Kammerdecke 4i gebildeten Ebene sowie parallel zur Arbeitsebene. Zumindest in der geschlossenen Position des Deckels 4a liegt die von der Kammerdecke 4i gebildete Ebene auch parallel zu der horizontalen Arbeitsebene.

Durch diesen Aufbau beziehungsweise die Befestigung der Pulverauftragseinheit 8 oberhalb der Arbeitsebene und insbesondere an der Kammerdecke 4i beziehungsweise dem Deckel 4a hängt die Pulverauftragseinheit 8 in der Arbeitsposition, das heißt in der geschlossenen Position des Deckels 4a, von der Kammerdecke 4i beziehungsweise vom Deckel 4a zu der Arbeitsebene herab.

Zwischen der linearen Antriebseinheit 8b und der Führungsschiene 8f sind die beiden Einkoppelgläser 4d angeordnet, wodurch bei geschlossenem Deckel 4a jeweils zumindest ein Laserstrahl eingekoppelt und zu dem entsprechenden Behälter 5a beziehungsweise 5b geführt werden kann. Auch ist durch die Einkoppelgläser 4d ein Einblick in die Prozesskammer 4 und auf die Arbeitsebene möglich. Es ist jedoch ebenso denkbar, dass nur ein entsprechend größer dimensioniertes Einkoppelglas 4d vorgesehen ist, um mit den Laserstrahlen mindestens die Trägerplatten 7a, 7b beziehungsweise Substratplatten der beiden Behälter 5a, 5b zu erreichen, sofern es sich bei der PBLS-Anlage 1 um ein Multiscannersystem handelt.

In der Figur 1c ist eine Ansicht der Pulverauftragseinheit 8 in ihrer zuvor beschriebenen Arbeitsposition bei vollständig geschlossener Prozesskammer 4 dargestellt. Erkennbar ist der Antriebsschlitten 8g, über den die Traverse 8d antriebsmäßig mit der Antriebseinheit 8b verbunden ist. Die Traverse 8d und der hiervon getragene Schieber 8a hängen in Richtung des Kammerbodens 4b herab und sind dementsprechend zwischen der Führungsschiene 8f beziehungsweise der Antriebseinheit 8b und dem Kammerboden 4b angeordnet. Keine Komponente der Pulverauftragseinheit 8 ist somit am Kammerboden 4b beziehungsweise der Arbeitsebene befestigt, sondern hiervon möglichst weit entfernt, damit eine Verunreinigung im Bereich der beweglichen Komponenten beziehungsweise Führungskomponenten, insbesondere der in Figur 1c verdeckten und daher nicht dargestellten Verbindung der Führungswagen 8c mit der Führungsschiene 8f und des Antriebsschlittens 8g mit der Antriebseinheit 8b, durch Pulver minimiert wird.

In der für den laufenden Betrieb der PBLS-Anlage 1 geschlossenen Position des Deckels 4a ist die Pulverauftragseinheit 8 in der Arbeitsposition (siehe Figur 1c), wobei sich zumindest das Auftragsmedium parallel zur Substratplatte und zur Arbeitsebene erstreckt, so dass auf der Bauplattform der PBLS-Anlage 1 in Fahrtrichtung F ein gleichmäßiger Pulverauftrag mit möglichst ebener und zur Substratplatte sowie zur Arbeitsebene paralleler Oberfläche der jeweiligen Pulverschicht verwirklicht werden kann. Um das Auftragsmedium parallel zu der Oberfläche der Substratplatte beziehungsweise der Arbeitsebene ausrichten oder auch leicht wechseln zu können, weist der Schieber 8a einen Klemmhalter auf, an dem beziehungsweise über das das entsprechende Auftragsmedium lösbar befestigt und entsprechend ausgerichtet werden kann. Hierfür ist jedes Einkoppelglas 4d lösbar befestigt und abnehmbar, so dass nach deren Abnahme von der Kammerdecke 4i die Pulverauftragseinheit in der Prozesskammer 4 auch bei geschlossener Position des Deckels 4a für ein entsprechendes Ausrichten zugänglich ist. Vorzugsweise erstrecken sich auch die Antriebseinheit 8b und die Führungsschiene 8f parallel zur Arbeitsebene. Alternativ kann der Schieber 8a mit dem Auftragsmedium auch um eine gegenüber der Arbeitsebene rechtwinklige und beispielsweise zwischen den beiden Behältern 5a, 5b angeordnete Achse drehbar gelagert sein, wobei die Antriebseinheit 8b einen entsprechenden Drehantrieb darstellt.

Die als Auftragsmedium dienende und über den Schieber 8a beziehungsweise Führungswagen 8c bewegliche Bürste 8e erstreckt sich durchgehend entlang der Längserstreckung des Schiebers 8a sowie in der Arbeitsposition zwischen dem Schieber 8a und der Arbeitsebene beziehungsweise dem Kammerboden 4b. Vorzugsweise erstreckt sich die Bürste 8e in der Arbeitsposition und während der Durchführung des PBLS-Verfahrens bis zur Arbeitsebene beziehungsweise zum Kammerboden 4b und berührt diese, um in der jeweiligen Fahrtrichtung F gesehen vor dem Schieber 8a beziehungsweise der Bürste 8e liegendes Pulver möglichst vollständig mitzunehmen und zugleich eine möglichst ebene Oberfläche der Pulverschicht auf Höhe der Arbeitsebene zu erzeugen. Durch die zusammenhängende Ausdehnung der Bürste 8e entlang der Längserstreckung des Schiebers 8a wird eine wirksame Länge definiert. Nur im Bereich der wirksamen Länge kann das Auftragsmedium Pulver mitnehmen und gleichmäßig auftragen. Die wirksame Länge kann auch von mehr als einer Bürste 8e gebildet werden, sofern diese entsprechend nah nebeneinander positioniert sind.

Die wirksame Länge des Auftragsmediums ist in der geschlossenen Position des Deckels 4a deckungsgleich oder kürzer gegenüber der entsprechenden Längserstreckung der Grundfläche der Auffangbehälter 14, damit das überschüssige Pulver möglichst restlos in den Pulverüberlauf geschoben werden kann, ohne sich auf der Arbeitsebene an den Rändern des jeweiligen Pulverüberlaufs zu sammeln. Um eine gleichmäßige Pulverschicht erzeugen zu können, überspannt der Schieber 8a mit seiner von dem Arbeitsmedium gebildeten wirksamen Länge jedoch zumindest in der Arbeitsposition den ersten Behälter 5a für das Bauteil vollständig, vorzugsweise auch den Behälter des entsprechenden Bottom Up-Pulverfördermechanismus. Dadurch dient das Auftragsmedium nicht nur zum Schieben von Pulver auf die erste Trägerplatte 7a beziehungsweise die Substratplatte, sondern auch als Mittel zum Glätten der hierdurch in der gewünschten Schichtdicke erzeugten Pulverschicht. Die gewünschte Schichtdicke der Pulverschicht entspricht bei der ersten Pulverschicht dem Abstand zwischen der Arbeitsebene und der Substratplatte und bei jeder weiteren Pulverschicht dem Abstand zwischen der Arbeitsebene und der Oberfläche der vorangegangenen Pulverschicht.

Das Auftragsmedium erstreckt sich allein oder zusammen mit dem Schieber 8a ausgehend von der Arbeitsebene außerdem über eine wirksame Höhe, die die Mitnahme einer Pulvermenge erlaubt, die für den Auftrag mindestens einer gleichmäßigen Pulverschicht ausreicht.

Anstelle einer Bürste 8e kann auch ein anderes Auftragsmedium wie beispielsweise eine Gummilippe, Silikonlippe, Klinge, oder Walze verwendet werden.

Die Figur 2 zeigt eine schematische Darstellung der PBLS-Anlage 1 in einer zweiten Ausführungsform, die ausgehend von der Basis-Ausführung modular erweitert beziehungsweise umgerüstet wurde. Hierbei unterscheidet sich die PBLS-Anlage 1 von der Basis-Ausführung dadurch, dass sie als Multiscannersystem, beispielsweise in Form eines Zweiscannersystems ausgebildet ist und dementsprechend um eine zweite Scannereinheit 2 erweitert wurde. Außerdem wird der zweite Behälter 5b nicht mehr als Pulverbehälter des Bottom Up-Pulverfördermechanismus, sondern als zusätzlicher Baubehälter betrieben. Die den beweglichen Boden bildende zweite Trägerplatte 7b stellt entsprechender Weise eine zusätzliche Bauplattform dar, auf der eine Substratplatte über entsprechende Bohrungen angeschraubt werden kann und die während der Durchführung des PBLS-Verfahrens ebenso wie die erste Trägerplatte 7a des ersten Bauteilbehälters abgesenkt wird. Somit kann jeder Bauplattform mindestens eine oder im Betrieb als Multiscannersystem auch mehrere der Scannereinheiten 2 zugeordnet werden, wodurch unabhängig voneinander und zeitgleich zwei unterschiedliche Bauteile innerhalb der Prozesskammer 4 aufgebaut werden können. Durch die beiden voneinander unabhängigen Bauplattformen, können die jeweiligen Bauteile insbesondere auch mit unterschiedlichen Schichtdicken und damit auch unterschiedlich schnell hergestellt werden.

Durch eine derartige Umrüstung beziehungsweise ein derartiges Betreiben des zweiten Behälters 5b als zweiter Bauteilbehälter ist die Einrichtung eines neuen Bottom Up-Pulverfördermechanismus erforderlich. Unter Einbeziehung von einem der beiden Auffangbehälter 14 ist hierfür ein dritter Behälter 5c mit kolbenartig beweglichem Boden eingerichtet, um einen neuen Bottom Up-Pulverfördermechanismus beziehungsweise Pulverbehälter hierfür zu bilden. Um dies zu ermöglichen ist jeder der beiden Pulverüberläufe gleich und insbesondere so ausgelegt, dass er optional zu einem Bottom Up-Pulverfördermechanismus umgerüstet werden kann.

Hierfür ist die PBLS-Anlage 1 in der Basis-Ausführung wie nachfolgend beschrieben wird auszulegen, damit sie modular erweitert beziehungsweise für einen Betrieb in der zweiten Ausführungsform umgerüstet werden kann.

Um den gewählten Auffangbehälter 14 in einen entsprechenden Pulverbehälter umzurüsten, wird eine dritte Trägerplatte 7c als kolbenartig beweglicher Boden in den Auffangbehälter 14 beziehungsweise zwischen dessen Seitenwände 14a eingesetzt, die entsprechender Weise Seitenwände 6c des Behälters 5c bilden. Analog zum Antrieb 13 der ersten und der zweiten Trägerplatte 7a, 7b wird auch hier ein entsprechender Antrieb, beispielsweise in Form eines elektromechanischen Hubzylinders, Kugelgewindetriebes, Riementriebes, pneumatischen oder hydraulischen Antriebs, innerhalb des Auffangbehälters 14, insbesondere zwischen der Trägerplatte 7c und einem unbeweglichen Boden des Auffangbehälters 14, angeordnet, um hierüber die Trägerplatte 7c nach Art eines Kolbens anheben oder absenken zu können. Die Trägerplatte 7c ist entsprechend der Grundfläche des Auffangbehälters 14 innerhalb dessen Seitenwände 14a eingepasst.

Da die Grundfläche des Auffangbehälters 14 und damit bei gleicher maximaler Hubhöhe auch das maximal zur Aufnahme von Pulver zur Verfügung stehende Volumen des hiermit gebildeten dritten Behälters 5c kleiner als das der beiden Behälter 5a, 5b ist, kann in dem Behälter 5c auch vergleichsweise weniger Pulver bevorratet werden. Da die PBLS-Anlage 1 in der zweiten Ausführungsform mit den ersten beiden Behältern 5a, 5b zwei Bauplattformen aufweist, die jeweils mit entsprechenden Pulverschichten versehen werden müssen, erfordert dies eine noch häufigere Pulverbeladung des Behälters 5c als oben in Bezug auf gleich große Behälter 5a, 5b beschrieben.

Um dieser Problematik gerecht zu werden, ist der erfindungsgemäße Bottom Up-Pulverfördermechanismus so ausgebildet, dass er ohne Öffnen der Prozesskammer 4 über den Deckel 4a und damit auch im laufenden Betrieb der PBLS-Anlage 1 mit neuem Pulver versorgt beziehungsweise beladen werden kann.

Hierfür ist der als dritter Behälter 5c in den Bottom Up-Pulverfördermechanismus einbezogene Auffangbehälter 14 vorzugsweise bereits in der Basis-Ausführung so ausgelegt, dass er in seiner Seitenwand 6c beziehungsweise 14a und damit unterhalb der Arbeitsebene sowie unterhalb der dortigen oberen Öffnung des Auffangbehälters 14 eine untere Öffnung 15a (siehe Figur 2) hat, durch die der Behälter 5c mit Pulver befüllt werden kann. Die Öffnung 15a kann auch nachträglich vorgesehen werden. In der Basis-Ausführung ist die Öffnung 15a beispielsweise mittels eines geeigneten Verschlusses 15c (siehe Figur 2a) gasdicht verschlossen und offenbar. Über die Öffnung 15a ist der Bottom Up-Pulverfördermechanismus modular erweiterbar, da wie in Figur 2 dargestellt eine Leitung gasdicht und lösbar an den Behälter 5c beziehungsweise dessen Seitenwand 6c angeschlossen werden kann, um hierüber den Behälter 5c mit Pulver zu befüllen. Die Leitung ist ebenfalls gasdicht und vorzugsweise als Rohr 10 oder flexibler Schlauch ausgebildet. Über die Leitung ist der Bottom Up-Pulverfördermechanismus gasdicht mit einem als Vorratsbehälter für Pulver dienenden und dementsprechend mit Pulver befüllten externen Behälter 9 verbunden. Auch der außerhalb des Behälters 5c des Bottom Up-Pulverfördermechanismus angeordnete externe Behälter 9 ist daher gasdicht ausgebildet beziehungsweise verschließbar. Somit kann von dem externen Behälter 9 Pulver durch die Leitung zu dem Behälter 5c und in diesen hinein geleitet werden, um diesen im laufenden Betrieb der PBLS-Anlage 1 und damit bei geschlossener Prozesskammer 4 zu befüllen beziehungsweise zu beladen. Hierbei ist die Leitung vorzugsweise rutschenartig und dementsprechend zwischen dem oberhalb der Öffnung 15a angeordneten externen Behälter 9 und der Öffnung 15a mit einem Gefälle ausgebildet, um das Pulver schwerkraftgetrieben zum Behälter 5c und durch die Öffnung 15a zu leiten. Die Öffnung 15a ist zumindest derart zu positionieren, dass das über die Leitung zugeführte Pulver durch die Öffnung 15a in zumindest einer Position der Trägerplatte 7c in den Behälter 5c hineinfallen und diesen von der Trägerplatte 7c bis zur Höhe der Öffnung 15a füllen kann. Um auf diese Weise eine möglichst große Menge Pulver einfüllen zu können, ist die Öffnung 15a vorzugsweise im oberen Bereich der Seitenwand 6c des Behälters 5c und damit in möglichst großem Abstand zu der am weitesten entfernten Position der Trägerplatte 7c angeordnet, die diese in Bezug zur Arbeitsebene einnehmen kann.

Der dementsprechend erweiterte Bottom Up-Pulverfördermechanismus weist außerdem einen Verschlussmechanismus auf, der vorzugsweise in der Leitung und insbesondere im Bereich ihres der Öffnung 15a zugewandten Endes angeordnet ist und beispielsweise als gasdichter Vakuumverschluss, insbesondere als Scheibenventil, ausgebildet ist. Alternativ kann der Verschlussmechanismus auch an der Seitenwand 6c beziehungsweise in der Öffnung 15a angeordnet sein. Durch eine entsprechende Ansteuerung oder manuelle Betätigung des Verschlussmechanismus kann die Pulverbeladung des Behälters 5c geregelt werden, indem der Verschlussmechanismus und damit auch die Leitung beziehungsweise die Öffnung 15a im laufenden Betrieb der PBLS-Anlage 1 so geschlossen oder geöffnet werden, dass nur bei einer geeigneten Position der dritten Trägerplatte 7c unterhalb der Öffnung 15a Pulver in den Behälter 5c beziehungsweise zwischen dessen Seitenwände 6c gelangen kann. Bei Verwendung eines Vakuumverschlusses kann die Schutzgasatmosphäre in Bezug auf den Vakuumverschluss anlagenseitig mit einem entsprechend kleineren Volumen aufrechterhalten werden, so dass auf einer hiervon abgewandten Seite des Vakuumverschlusses die Leitung und/oder der Behälter 9 zum Nachfüllen abgenommen oder geöffnet werden können, ohne dass die anlagenseitige Schutzgasatmosphäre hiervon beeinflusst wird. Um zu verhindern, dass Pulver unter die Trägerplatte 7c gelangt, ist die Trägerplatte 7c zur Pulverbeladung so weit abzusenken, dass die Öffnung 15a zwischen der Arbeitsebene und der Trägerplatte 7c angeordnet ist, bevor der Verschlussmechanismus geöffnet wird.

Der Auffangbehälter 14, der nicht zu einem Bottom Up-Pulverfördermechanismus umgerüstet und in diesen einbezogen wird, dient weiterhin als Pulverüberlauf.

Die Figur 2a zeigt eine Ansicht der ersten beiden Behälter 5a, 5b mit angehobenen Trägerplatten 7a, 7b. Wie zuvor in Bezug auf die zweite Ausführungsform und den Auffangbehälter 14 beschrieben, ist auch in der Wand 11 beziehungsweise Seitenwand 6b des Behälters 5b des entsprechenden Bottom Up-Pulverfördermechanismus eine gegenüber der oberen Öffnung des Behälters 5b untere Öffnung 15b vorgesehen. Dadurch kann auch der Bottom Up-Pulverfördermechanismus der in Figur 1 gezeigten PBLS-Anlage 1 in der ersten Ausführungsform dahin gehend modular erweitert werden, dass dessen als Pulverbehälter betriebener Behälter 5b ohne Öffnen der Prozesskammer 4 über den Deckel 4a und damit auch im laufenden Betrieb der PBLS-Anlage 1 mit neuem Pulver befüllt beziehungsweise beladen werden kann. Die Öffnung 15b ist mittels eines Verschlusses 15c verschlossen. Über die Öffnung 15b kann dann in gleicher Weise wie anhand von Figur 2 beschrieben optional eine Leitung sowie ein bezüglich des Behälters 5b außerhalb angeordneter externer Behälter 9 angeschlossen werden, um den Bottom Up-Pulverfördermechanismus entsprechend durch die Öffnung 15b mit Pulver befüllen zu können. Hierfür ist gegebenenfalls der entsprechende in Figur 1 dargestellte und lösbar befestigte Auffangbehälter 14 zu entfernen, um die Leitung wie in Figur 2 gezeigt seitlich im Bereich der Stirnwand 4g unter der Arbeitsebene vom Tisch 3 weg und in Richtung des Behälters 9 zu führen. In der zweiten Ausführungsform ist die Öffnung 15b in der von der Wand 11 gebildeten Seitenwand 6b des zweiten Behälters 5b mittels des Verschlusses 15c verschlossen (in Figur 2 nicht dargestellt).

Die genannten Komponenten des erweiterten Bottom Up-Pulverfördermechanismus für dessen Pulverbeladung im laufenden Betrieb der PBLS-Anlage 1 sind insbesondere so ausgebildet und gasdicht an den jeweiligen Bottom Up-Pulverfördermechanismus anschließbar, dass auch im externen Behälter 9 und in der Leitung die Schutzgasatmosphäre aufrechterhalten werden kann.

Auch ist es denkbar, ausgehend von einem wie vorstehend erweiterten Bottom Up-Pulverfördernechanismus einer PBLS-Anlage 1 in der ersten Ausführungsform eine Umrüstung für einen Betrieb in der zweiten Ausführungsform vorzunehmen, indem die Leitung an die entsprechende Öffnung 15a des Auffangbehälters 14 angeschlossen wird, die Öffnung 15b im Behälter 5b mittels des Verschlusses 15c verschlossen wird und durch Hinzunahme der Trägerplattte 7c und des Antriebs wie oben beschrieben der Bottom Up-Pulverfördermechanismus mit dem Auffangbehälter 14 gebildet wird, so dass der Behälter 5b als Bauteilbehälter betrieben werden kann. Eine entsprechend umgekehrte Umrüstung ist ebenso möglich.

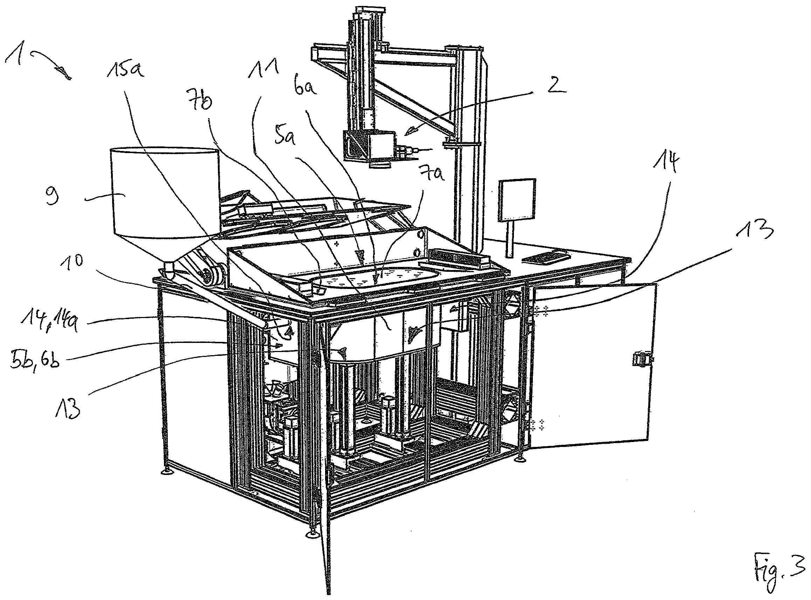

In der Figur 3 ist eine schematische Darstellung der PBLS-Anlage 1 in einer dritten Ausführungsform gezeigt, die sich von der zweiten Ausführung dadurch unterscheidet, dass sie als Einscannersystem mit nur einer Scannereinheit 2 ausgebildet ist. Optional ist jedoch auch ein Multiscannersystem denkbar.

Außerdem ist der Trenneinsatz 12 entfernt und im Bereich der inneren Ausnehmung nur noch ein erster Behälter 5a angeordnet, der sich mit seiner oberen Öffnung über die innere Ausnehmung an die Arbeitsebene anschließt. In der dritten Ausführungsform wird die Seitenwand 6a des ersten Behälters 5a vollständig von der Wand 11 gebildet, wodurch die Ausnehmung auch durch den Behälter 5a begrenzt wird. Die hierbei in der Wand 11 vorgesehene Öffnung 15b (siehe Figur 2a) ist mittels des Verschlusses 15c verschlossen (in Figur 3 nicht dargestellt). In den Behälter 5a ist als beweglicher Boden eine gegenüber den ersten beiden Ausführungsformen entsprechend größer dimensionierte erste Trägerplatte 7a eingepasst. Dadurch ist der erste Behälter 5a in der dritten Ausführungsform größer als in den ersten beiden Ausführungsformen. Der erste Behälter 5a umfasst hierbei zumindest einen entsprechend zentrierten oder beide der in den ersten beiden Ausführungsformen vorgesehenen Antriebe 13, um gemeinsam die Trägerplatte 7a heben und senken zu können. Somit kann die PBLS-Anlage 1 durch Ausbau des Trenneinsatzes 12, Austausch der beiden Trägerplatten 7a, 7b der ersten Ausführungsform gegen die Trägerplatte 7a der dritten Ausführungsform sowie durch die oben beschriebene Umrüstung eines Pulverüberlaufs in einen neuen Bottom Up-Pulverfördermechanismus auf einfache Weise für die Herstellung größerer Bauteile umgerüstet werden. Durch die Umrüstung des Pulverüberlaufs umfasst die dritte Ausführungsform nur noch einen zweiten Behälter 5b, der dem in Bezug auf das zweite Ausführungsbeispiel beschriebenen dritten Behälter 5c entspricht, als Pulverbehälter betrieben und ebenso modular für ein Befüllen im laufenden Betrieb der PBLS-Anlage 1 erweiterbar und erweitert ist.

Umgekehrt ist es ebenso denkbar die PBLS-Anlage 1 ausgehend von der dritten Ausführungsform in die zweite Ausführungsform umzurüsten, indem die Trägerplatte 7a der dritten Ausführungsform ausgebaut, der Trenneinsatz 12, sowie die beiden Trägerplatten 7a, 7b der zweiten Ausführungsform eingesetzt werden und die zweite Scannereinheit 2 installiert wird.

Die PBLS-Anlage 1 kann auch unmittelbar von der ersten Ausführungsform in die dritte Ausführungsform und umgekehrt umgerüstet werden.

Grundsätzlich kann auch jede der zuvor beschriebenen PBLS-Anlagen 1 nur die Öffnung 15a in der Seitenwand 14a des Auffangbehälters 14, nur die Öffnung 15b in der Seitenwand 6b beziehungsweise in der Wand 11 oder beide Öffnungen 15a und 15b aufweisen mit der jeweils daraus resultierenden modularen Erweiterbarkeit des zugehörigen Pulverbehälters.

Eine eigene Erfindung wird insbesondere in einem Verfahren zur oben beschriebenen Umrüstung und zum Betrieb einer PBLS-Anlage 1 ausgehend von der PBLS-Anlage 1 in der ersten Ausführungsform in die zweite und/oder dritte Ausführungsform und umgekehrt gesehen, sowie ausgehend von der zweiten in die dritte Ausführungsform und umgekehrt, insbesondere in den jeweiligen Schritten zur Umrüstung des Auffangbehälters 14 zu einem Pulverbehälter des Bottom Up-Pulvermechanismus, in der Anordnung beziehungsweise Herausnahme des Trenneinsatzes 12 in der inneren Ausnehmung zur Ausbildung von zwei Behältern 5a, 5b oder einem größeren Behälter 5a sowie in dem wahlweisen Betrieb des zweiten Behälters 5b als Pulverbehälter in der ersten Ausführungsform oder als Bauteilbehälter in der zweiten Ausführungsform. Die Schritte zur Erweiterung eines Bottom Up-Pulverfördermechanismus sind für den zugehörigen Behälter 5b in der ersten Ausführungsform identisch mit den entsprechenden Schritten für den zugehörigen Behälter 5c in der zweiten Ausführungsform beziehungsweise den zugehörigen Behälter 5b in der dritten Ausführungsform, die einen entsprechend umgerüsteten Auffangbehälter 14 umfassen.

### Bezugszeichenliste

- 1: PBLS-Anlage
- 2: Scannereinheit
- 3: Tisch
- 4: Prozesskammer
- 4a: Deckel
- 4b: Kammerboden
- 4c: Seitenwand
- 4d: Einkoppelglas
- 4e: Rückwand
- 4f: Vorderwand
- 4g: Stirnwand
- 4h: Sichtfenster
- 4i: Kammerdecke
- 5a: erster Behälter
- 5b: zweiter Behälter
- 5c: dritter Behälter
- 6a: erste Seitenwand
- 6b: zweite Seitenwand
- 6c: dritte Seitenwand
- 7a: erste Trägerplatte
- 7b: zweite Trägerplatte
- 7c: dritte Trägerplatte
- 8: Pulverauftragseinheit
- 8a: Schieber
- 8b: Antriebseinheit
- 8c: Führungswagen
- 8d: Traverse
- 8e: Bürste
- 8f: Führungsschiene
- 8g: Antriebsschlitten
- 9: externer Behälter
- 10: Rohr
- 11: Wand
- 12: Trenneinsatz
- 13: Antrieb
- 14: Auffangbehälter
- 14a: Seitenwand
- 15a: Öffnung
- 15b: Öffnung
- 15c: Verschluss
- 16: Schwenkarm
- 17: Kanal
- 17a: erste Öffnung
- 17b: zweite Öffnung
- 17c: dritte Öffnung
- 17d: Leiste
- 18: Zugmitteltrieb
- 19: Krafteinrichtung
- F: Fahrtrichtung

## Patentansprüche

1. Bottom Up-Pulverfördermechanismus für eine PBLS-Anlage (1), der einen als Pulverbehälter betriebenen Behälter (5b, 5c) mit einem nach Art eines Kolbens beweglichen Boden umfasst, um Pulver in Richtung einer dem Boden gegenüberliegenden oberen Öffnung des Behälters (5b, 5c) und/oder durch die obere Öffnung des Behälters (5b, 5c) und damit zu einer Arbeitsebene der PBLS-Anlage (1) zu fördern, wobei der Bottom Up-Pulverfördermechanismus einen externen Behälter (9) umfasst, der gasdicht verschließbar und gasdicht mit einer gasdichten Leitung verbunden ist, um über die Leitung Pulver aus dem Behälter (9) in den als Pulverbehälter betriebenen Behälter (5b, 5c) leiten zu können, **dadurch gekennzeichnet, dass** der als Pulverbehälter betriebene Behälter (5b, 5c) in einer Seitenwand (6b, 6c) eine gegenüber der oberen Öffnung untere Öffnung (15a, 15b) aufweist, durch die der Behälter (5b, 5c) mit Pulver befüllbar ist und die mit der Leitung gasdicht und lösbar verbindbar ist, um schwerkraftgetrieben Pulver von dem oberhalb der Öffnung (15a, 15b) angeordneten externen Behälter (9) durch die ein Gefälle aufweisende Leitung und durch die untere Öffnung (15a, 15b) in den als Pulverbehälter betriebenen Behälter (5b, 5c) leiten zu können.

2. Bottom Up-Pulverfördermechanismus nach Anspruch 1, **dadurch gekennzeichnet, dass** die Öffnung (15a, 15b) über einen Verschluss (15c) gasdicht verschließbar ist und geöffnet werden kann, um den Behälter (5b, 5c) durch die Öffnung (15a, 15b) mit Pulver zu befüllen.

3. Bottom Up-Pulverfördermechanismus nach Anspruch 1 oder 2, **dadurch gekennzeichnet, dass** die Leitung als Rohr (10) oder flexibler Schlauch ausgebildet ist.

4. Bottom Up-Pulverfördermechanismus nach einem der Ansprüche 1 bis 3, **dadurch gekennzeichnet, dass** der Bottom Up-Pulverfördermechanismus einen Verschlussmechanismus, vorzugsweise in Form eines Vakuumverschlusses, insbesondere in Form eines Scheibenventils, aufweist, der automatisch oder manuell verschließbar und öffenbar ist, um die Befüllung des Behälters (5b, 5c) mit Pulver durch die Öffnung (15a, 15b) zu regeln/zu steuern und der vorzugsweise in der Leitung und/oder der Öffnung (15a, 15b) angeordnet ist und insbesondere im laufenden Betrieb der PBLS-Anlage (1) derart verschließbar und öffenbar ist, dass nur dann Pulver durch die Öffnung (15a, 15b) geleitet wird, wenn die Öffnung (15a, 15b) zwischen der Arbeitsebene und einer als Boden des Behälters (5b, 5c) dienenden Trägerplatte (7b, 7c) angeordnet ist.

5. PBLS-Anlage (1) mit einem Bottom Up-Pulverfördermechanismus, wobei die PBLS-Anlage (1) einen als Bauteilbehälter betriebenen ersten Behälter (5a) mit einem nach Art eines Kolbens beweglichen Boden und als Teil des Bottom Up-Pulverfördermechanismus einen als Pulverbehälter betriebenen Behälter (5b, 5c) mit einem nach Art eines Kolbens beweglichen Boden umfasst, **dadurch gekennzeichnet, dass** der Bottom Up-Pulverfördermechanismus nach einem der Ansprüche 1 bis 4 ausgebildet ist.

6. PBLS-Anlage (1) nach Anspruch 5, **dadurch gekennzeichnet, dass** die PBLS-Anlage (1) einen Auffangbehälter (14) für überschüssiges Pulver aufweist, der eine obere Öffnung und vorzugsweise in einer Seitenwand (14a) eine gegenüber der oberen Öffnung untere Öffnung (15a) aufweist, die über einen Verschluss (15c) gasdicht verschließbar und öffenbar ist, wobei insbesondere der Auffangbehälter (14), dessen obere und untere Öffnung (15a) ausgebildet sind, um in einen Bottom Up-Pulverfördermechanismus nach einem der Ansprüche 1 bis 5 umgerüstet zu werden, dessen Seitenwand (6b, 6c) von der Seitenwand (14a) des Auffangbehälters (14) gebildet wird.

7. PBLS-Anlage (1) mit einem Bottom Up-Pulverfördermechanismus, wobei die PBLS-Anlage (1) einen als Bauteilbehälter betriebenen ersten Behälter (5a) mit einem nach Art eines Kolbens beweglichen Boden und als Teil des Bottom Up-Pulverfördermechanismus einen als Pulverbehälter betriebenen Behälter (5b, 5c) mit einem nach Art eines Kolbens beweglichen Boden umfasst, sowie einen Auffangbehälter (14) für überschüssiges Pulver umfasst, wobei der Auffangbehälter (14) eine obere Öffnung aufweist, **dadurch gekennzeichnet, dass** der Auffangbehälter (14) in einer Seitenwand (14a) eine gegenüber der oberen Öffnung untere Öffnung (15a) aufweist, die vorzugsweise über einen Verschluss (15c) gasdicht verschließbar und öffenbar ist, wobei insbesondere der Auffangbehälter (14), dessen obere und untere Öffnung (15a) ausgebildet sind, um in einen Bottom Up-Pulverfördermechanismus nach einem der Ansprüche 1 bis 4 umgerüstet zu werden, dessen Seitenwand (6b, 6c) von der Seitenwand (14a) des Auffangbehälters (14) gebildet wird.

8. PBLS-Anlage (1) nach einem der Ansprüche 5 bis 7, **dadurch gekennzeichnet, dass** die PBLS-Anlage (1) einen als Bauteilbehälter betriebenen zweiten Behälter (5b) mit einem nach Art eines Kolbens beweglichen Boden aufweist und die PBLS-Anlage (1) als Multiscannereinheit ausgebildet ist.

9. Verfahren zum Umrüsten und Betreiben einer PBLS-Anlage (1) mit einem Bottom Up-Pulverfördermechanismus, wobei die PBLS-Anlage (1) in einer ersten Ausführungsform als Einscannereinheit oder als Multiscannereinheit betrieben wird und einen als Bauteilbehälter betriebenen ersten Behälter (5a) mit einem nach Art eines Kolbens beweglichen Boden und als Teil des Bottom Up-Pulverfördermechanismus einen als Pulverbehälter betriebenen zweiten Behälter (5b) mit einem nach Art eines Kolbens beweglichen Boden sowie einen Auffangbehälter (14) für überschüssiges Pulver umfasst, wobei der Auffangbehälter (14) eine obere Öffnung aufweist, **dadurch gekennzeichnet, dass** mit dem Auffangbehälter (14) ein dritter Behälter (5c) mit einem nach Art eines Kolbens beweglichen Boden als Teil eines gleichartigen neuen Bottom Up-Pulverfördermechanismus nach einem der vorherigen Ansprüche gebildet wird, indem über die obere Öffnung eine Trägerplatte (7c) als beweglicher Boden in den Auffangbehälter (14) eingesetzt wird, und indem ein Antrieb, vorzugsweise in Form eines elektromechanischen Hubzylinders, Kugelgewindetriebes, Riementriebes, pneumatischen oder hydraulischen Antriebs, zwischen einem unbeweglichen Boden des Auffangbehälters (14) und der Trägerplatte (7c) angeordnet wird, um die Trägerplatte (7c) nach Art eines Kolbens anheben oder absenken zu können, und indem der externe Behälter (9) über die Leitung (10) mit der unteren Öffnung (15a) des als Pulverbehälter betriebenen dritten Behälters (5c) verbunden wird.

10. Verfahren nach Anspruch 9, **dadurch gekennzeichnet, dass** der zweite Behälter (5b) in einer zweiten Ausführungsform der PBLS-Anlage (1) neben dem ersten Behälter (5a) als zusätzlicher Bauteilbehälter betrieben wird und hierfür die PBLS-Anlage (1) als Multiscannereinheit betrieben wird.

11. Verfahren nach Anspruch 9 oder 10, **dadurch gekennzeichnet, dass** in einer Arbeitsebene der PBLS-Anlage (1), die insbesondere zumindest teilweise von einem Kammerboden (4b) einer Prozesskammer (4) der PBLS-Anlage (1) gebildet wird, eine Ausnehmung vorgesehen ist, die von einer sich an die Arbeitsebene anschließenden Wand (11) gebildet wird, und dass in der Ausnehmung wahlweise der erste Behälter (5a) und der zweite Behälter (5b) angeordnet werden, wobei deren Seitenwand (6a, 6b) vorzugsweise jeweils von einem Abschnitt der Wand (11) und von einem in der Ausnehmung angeordneten Trenneinsatz (12) gebildet wird, der die beiden Behälter (5a, 5b) voneinander beabstandet und vorzugsweise lösbar in der Ausnehmung befestigt wird, und wobei die PBLS-Anlage (1) als Multiscannereinheit betrieben wird, oder dass alternativ in einer dritten Ausführungsform der in der ersten beziehungsweise zweiten Ausführungsform als Pulverbehälter betriebene dritte Behälter (5c) zu einem zweiten Behälter (5b) der PBLS-Anlage (1) wird, indem der Trenneinsatz (12) aus der Ausnehmung herausgenommen wird und in der Ausnehmung nur ein gegenüber der ersten und zweiten Ausführungsform größerer erster Behälter (5a) angeordnet und als Bauteilbehälter betrieben wird, wobei dessen Seitenwand (6a) vorzugsweise von der die Ausnehmung begrenzenden Wand (11) gebildet wird.

## Claims

1. Bottom-up powder conveying mechanism for a PBLM system (1), which comprises a reservoir (5b, 5c) which is operated as a powder reservoir and has a floor which is movable in the manner of a piston in order to convey powder in the direction of an upper opening in the reservoir (5b, 5c) opposite the floor and/or through the upper opening in the reservoir (5b, 5c) and thus to a working plane of the PBLM system (1), wherein the bottom-up powder conveying mechanism comprises an external reservoir (9) which can be closed in a gas-tight manner and is connected in a gas-tight manner to a gas-tight conduit in order to be able to conduct powder, via the conduit, from the reservoir (9) into the reservoir (5b, 5c) which is operated as a powder reservoir, **characterised in that** the reservoir (5b, 5c) operated as a powder reservoir has, in a side wall (6b, 6c), an opening (15a, 15b) which is lower than the upper opening and through which the reservoir (5b, 5c) can be filled with powder and which can be connected in a gas-tight and releasable manner to the conduit in order to be able to conduct powder in a gravity-driven manner from the external reservoir (9) arranged above the opening (15a, 15b) through the sloping conduit and through the lower opening (15a, 15b) into the reservoir (5b, 5c) operated as a powder reservoir.

2. Bottom-up powder conveying mechanism as claimed in claim 1, **characterised in that** the opening (15a, 15b) can be closed in a gas-tight manner via a closure (15c) and can be opened in order to fill the reservoir (5b, 5c) with powder through the opening (15a, 15b).

3. Bottom-up powder conveying mechanism as claimed in claim 1 or 2, **characterised in that** the conduit is designed as tube (10) or flexible hose.

4. Bottom-up powder conveying mechanism as claimed in any one of claims 1 to 3, **characterised in that** the bottom-up powder conveying mechanism has a closure mechanism, preferably in the form of a vacuum closure, in particular in the form of a disk valve, which can be closed and opened automatically or manually in order to regulate/control the filling of the reservoir (5b, 5c) with powder through the opening (15a, 15b), and which is arranged preferably in the conduit and/or the opening (15a, 15b) and can be closed and opened in particular during ongoing operation of the PBLM system (1) such that powder is conducted through the opening (15a, 15b) only when the opening (15a, 15b) is arranged between the working plane and a support plate (7b, 7c) serving as a floor of the reservoir (5b, 5c).

5. PBLM system (1) comprising a bottom-up powder conveying mechanism, wherein the PBLM system (1) comprises a first reservoir (5a) which is operated as a component reservoir and has a floor movable in the manner of a piston and comprises as part of the bottom-up powder conveying mechanism a reservoir (5b, 5c) which is operated as a powder reservoir and has a floor movable in the manner of a piston, **characterised in that** the bottom-up powder conveying mechanism is designed according to one of claims 1 to 4.

6. PBLM system (1) as claimed in claim 5, **characterised in that** the PBLM system (1) has a collecting reservoir (14) for excess powder which has an upper opening and has, preferably in one side wall (14a), an opening (15a) which is lower than the upper opening and can be opened and can be closed in a gas-tight manner via a closure (15c), wherein in particular the collecting reservoir (14), whose upper and lower openings (15a) are designed to be retrofitted into a bottom-up powder conveying mechanism according to one of claims 1 to 5, whose side wall (6b, 6c) is formed by the side wall (14a) of the collecting reservoir (14).

7. PBLM system (1) comprising a bottom-up powder conveying mechanism, wherein the PBLM system (1) comprises a first reservoir (5a) which is operated as a component reservoir and has a floor movable in the manner of a piston and comprises, as part of the bottom-up powder conveying mechanism, a reservoir (5b, 5c) which is operated as a powder reservoir and has a floor movable in the manner of a piston, and comprises a collecting reservoir (14) for excess powder, wherein the collecting reservoir (14) has an upper opening, **characterised in that** the collecting reservoir (14) has, in a side wall (14a), an opening (15a) which is lower than the upper opening and can be opened and can be closed in a gas-tight manner preferably via a closure (15c), wherein in particular the collecting reservoir (14), whose upper and lower openings (15a) are designed to be retrofitted into a bottom-up powder conveying mechanism according to one of claims 1 to 4, whose side wall (6b, 6c) is formed by the side wall (14a) of the collecting reservoir (14).

8. PBLM system (1) as claimed in any one of claims 5 to 7, **characterised in that** the PBLM system (1) has a second reservoir (5b) which is operated as a component reservoir and has a floor movable in the manner of a piston and the PBLM system (1) is designed as a multiscanner unit.

9. Method for retrofitting and operating a PBLM system (1) comprising a bottom-up powder conveying mechanism, wherein the PBLM system (1) is operated in a first embodiment as a single scanner unit or as a multiscanner unit and comprises a first reservoir (5a) which is operated as a component reservoir and has a floor movable in the manner of a piston and comprises, as part of the bottom-up powder conveying mechanism, a second reservoir (5b) which is operated as a powder reservoir and has a floor movable in the manner of a piston, and comprises a collecting reservoir (14) for excess powder, wherein the collecting reservoir (14) has an upper opening, **characterised in that** with the collecting reservoir (14) a third reservoir (5c) having a floor movable in the manner of a piston is formed as part of a similar new bottom-up powder conveying mechanism as claimed in any one of the preceding claims, **in that** a support plate (7c) as a movable floor is inserted via the upper opening into the collecting reservoir (14), and **in that** a drive, preferably in the form of an electromechanical lifting cylinder, ball screw, belt drive, pneumatic or hydraulic drive, is arranged between an immovable floor of the collecting reservoir (14) and the support plate (7c) in order to be able to raise or lower the support plate (7c) in the manner of a piston, and **in that** the external reservoir (9) is connected via the conduit (10) to the lower opening (15a) of the third reservoir (5c) which is operated as a powder reservoir.

10. Method as claimed in claim 9, **characterised in that** the second reservoir (5b) in a second embodiment of the PBLM system (1) is operated in addition to the first reservoir (5a) as an additional component reservoir and for this purpose the PBLM system (1) is operated as a multiscanner unit.

11. Method as claimed in claim 9 or 10, **characterised in that** one working plane of the PBLM system (1) which is formed in particular at least partially by a chamber floor (4b) of a process chamber (4) of the PBLM system (1) is provided with an aperture which is formed by a wall (11) adjoining the working plane, and that optionally the first reservoir (5a) and the second reservoir (5b) are arranged in the aperture, wherein the side wall (6a, 6b) thereof is preferably formed in each case by a portion of the wall (11) and by a separating insert (12) which is arranged in the aperture, spaces the two reservoirs (5a, 5b) apart from one another and is preferably releasably attached in the aperture, and wherein the PBLM system (1) is operated as a multiscanner unit or that alternatively in a third embodiment, the third reservoir (5c) which in the first or second embodiment is operated as a powder reservoir becomes a second reservoir (5b) of the PBLM system (1), **in that** the separating insert (12) is taken out of the aperture and in the aperture there is arranged only one first reservoir (5a) which is larger in comparison with the first and second embodiment and is operated as a component reservoir, wherein the side wall (6a) thereof is formed preferably by the wall (11) defining the aperture.

## Revendications

1. Mécanisme de transport de poudre de bas en haut destiné à un système PBLS (1), lequel mécanisme comprend un récipient (5b, 5c) fonctionnant comme un récipient à poudre et comportant un fond déplaçable à la manière d'un piston pour transporter de la poudre en direction d'une ouverture supérieure, opposée au fond, du récipient (5b, 5c) et/ou à travers l'ouverture supérieure du récipient (5b, 5c) et donc vers un niveau de travail du système PBLS (1), le mécanisme de transport de poudre de bas en haut comprenant un récipient extérieur (9) qui peut être fermé de manière étanche aux gaz et qui est relié de manière étanche aux gaz à un conduit étanche aux gaz pour pouvoir guider la poudre du récipient extérieur (9) jusque dans le récipient (5b, 5c) fonctionnant comme un récipient à poudre, **caractérisé en ce que** le récipient (5b, 5c) fonctionnant comme un récipient à poudre comporte, dans une paroi latérale (6b, 6c), une ouverture (15a, 15b) qui est inférieure par rapport à l'ouverture supérieure, par laquelle le récipient (5b, 5c) peut être rempli de poudre et qui peut être reliée au conduit de manière amovible et étanche aux gaz pour pouvoir guider la poudre entraînée par gravité du récipient extérieur (9), disposé au-dessus de l'ouverture (15a, 15b), à travers le conduit présentant une inclinaison et à travers l'ouverture inférieure (15a, 15b) jusque dans le récipient (5b, 5c) fonctionnant comme un récipient à poudre.

2. Mécanisme de transport de poudre de base en haut selon la revendication 1, **caractérisé en ce que** l'ouverture (15a, 15b) peut être fermée de manière étanche au gaz par le biais d'une fermeture (15c) et qui peut être ouverte pour remplir le récipient (5b, 5c) avec de la poudre par l'ouverture (15a, 15b).

3. Mécanisme de transport de poudre de bas en haut selon la revendication 1 ou 2, **caractérisé en ce que** le conduit est conçu comme un tube (10) ou un tuyau flexible.

4. Mécanisme de transport de poudre de bas en haut selon l'une des revendications 1 à 3, **caractérisé en ce que** le mécanisme de transport de poudre de bas en haut comporte un mécanisme de fermeture, se présentant de préférence sous la forme d'une fermeture à vide, en particulier sous la forme d'une soupape à disque, qui peut être fermé et ouvert automatiquement ou manuellement pour régler/commander le remplissage du récipient (5b, 5c) avec de la poudre par l'ouverture (15a, 15b) et qui est disposée de préférence dans le conduit et/ou l'ouverture (15a, 15b) et qui peut être fermé et ouvert en particulier lorsque le système PBLS (1) est en cours de fonctionnement de telle manière que la poudre ne passe par l'ouverture (15a, 15b) que lorsque l'ouverture (15a, 15b) est ménagée entre le niveau de travail et une plaque de support (7b, 7c) servant de fond de récipient (5b, 5c).

5. Système PBLS (1) pourvu d'un mécanisme de transport de poudre de bas en haut, le système PBLS (1) comprenant un premier récipient (5a) qui fonctionne comme un récipient structurel et qui comporte un fond déplaçable à la manière d'un piston et, en tant que fond du mécanisme de transport de poudre de bas en haut, un récipient (5b, 5c) qui fonctionne comme un récipient à poudre et qui comporte un fond déplaçable à la manière d'un piston, **caractérisé en ce que** le mécanisme de transport de poudre de bas en haut est conçu selon l'une des revendications 1 à 4.

6. Système PBLS (1) selon la revendication 5, **caractérisé en ce que** le système PBLS (1) comporte un récipient collecteur (14) destiné à de la poudre en excès, lequel comporte une ouverture supérieure et, de préférence dans une paroi latérale (14a), une ouverture inférieure (15a), opposée à l'ouverture supérieure, qui peut être fermée et ouverte de manière étanche au gaz par une fermeture (15c), en particulier le récipient collecteur (14), son ouverture supérieure et son ouverture inférieure (15a) étant conçues pour être transformées en un mécanisme de transport de poudre de bas en haut selon l'une des revendications 1 à 5, sa paroi latérale (6b, 6c) étant formée par la paroi latérale (14a) du récipient collecteur (14).

7. Système PBLS (1) pourvu d'un mécanisme de transport de poudre de bas en haut, le système PBLS (1) comprenant un premier récipient (5a) fonctionnant comme un récipient structurel pourvu d'un fond déplaçable comme un piston et, en tant que partie du mécanisme de transport de poudre de bas en haut, un récipient (5b, 5c) qui fonctionne comme un récipient à poudre et qui est pourvu d'un fon déplaçable à la manière d'un piston et comprenant également un récipient collecteur (14) destiné à de la poudre en excès, le récipient collecteur (14) comportant une ouverture supérieure, **caractérisé en ce que** le récipient collecteur (14) comporte dans une paroi latérale (14a) une ouverture (15a) qui est inférieure à l'ouverture supérieure et qui peut être fermée de manière étanche aux gaz et ouverte de préférence au moyen d'une fermeture (15c), en particulier le récipient collecteur (14), son ouverture supérieure et son ouverture inférieure (15a) étant conçus pour être transformés en un mécanisme de transport de poudre de bas en haut selon l'une des revendications 1 à 4, sa paroi latérale (6b, 6c) étant formée par la paroi latérale (14a) du récipient collecteur (14).

8. Système PBLS (1) selon l'une des revendications 5 à 7, **caractérisé en ce que** le système PBLS (1) comporte un deuxième récipient (5b) fonctionnant comme un récipient structurel et comportant un fond déplaçable à la manière d'un piston et le système PBLS (1) est conçu comme une unité multi-scanner.

9. Procédé de transformation et de fonctionnement d'un système PBLS (1) pourvu d'un mécanisme de transport de poudre de bas en haut, le système PBLS (1) fonctionnant dans un premier mode de réalisation comme une unité mono-scanner ou comme une unité multi-scanner et comprenant un premier récipient (5a) fonctionnant comme récipient structurel et muni d'un fond déplaçable à la manière d'un piston et, en tant que partie du mécanisme de transport de poudre de bas en haut, un deuxième récipient (5b) fonctionnant comme un récipient à poudre et pourvu d'un fond déplaçable à la manière d'un piston et comprenant également un récipient collecteur (14) destiné à de la poudre en excès, le récipient collecteur (14) comportant une ouverture supérieure, **caractérisé en ce que**, avec le récipient collecteur (14), un troisième récipient (5c) pourvu d'un fond déplaçable à la manière d'un piston est formé en tant que partie d'un nouveau mécanisme de transport de poudre de bas en haut similaire selon l'une des revendications précédentes, une plaque de support (7c) étant insérée en tant que fond déplaçable dans le récipient collecteur (14) par l'ouverture supérieure, et un entraînement, se présentant de préférence sous la forme d'un cylindre de levage électromécanique, d'une vis d'entraînement à billes, d'un entraînement par courroie, d'un entraînement pneumatique ou hydraulique, étant disposé entre un fond non-déplaçable du récipient collecteur (14) et la plaque de support (7c) pour pouvoir soulever ou abaisser la plaque de support (7c) à la manière d'un piston, et le récipient extérieur (9) étant relié par le conduit (10) à l'ouverture inférieure (15a) du troisième récipient (5c) fonctionnait comme un récipient à poudre.

10. Procédé selon la revendication 9, **caractérisé en ce que**, dans un deuxième mode de réalisation du système PBLS (1) à côté du premier récipient (5a), le deuxième récipient (5b) fonctionne comme un récipient structurel supplémentaire et pour cela le système PBLS (1) fonctionne comme une unité multi-scanner.

11. Procédé selon la revendication 9 ou 10, **caractérisé en ce qu'**un évidement est ménagé dans un niveau de travail du système PBLS (1), qui est formé en particulier au moins partiellement par un fond (4b) d'une chambre de traitement (4) du système PBLS (1), lequel évidement est formé par une paroi (11) se raccordant au niveau de travail, et en que le premier récipient (5a) et le deuxième récipient (5b) sont disposés au choix dans l'évidement, leur paroi latérale (6a, 6b) étant de préférence formée respectivement par une portion de la paroi (11) et par un insert de séparation (12) disposé dans l'évidement et séparant les deux récipients (5a, 5b) l'un de l'autre et les fixe de préférence de manière amovible dans l'évidement, et le système PBLS (1) fonctionnant comme une unité multi-scanner ou, en variante dans un troisième mode de réalisation, le troisième récipient (5c), qui fonctionne comme un récipient à poudre dans le premier ou le deuxième mode de réalisation, devant un deuxième récipient (5b) du système PBLS (1), l'insert de séparation (12) étant retiré de l'évidement et seul un premier récipient (5a), plus grand que celui des premier et deuxième modes de réalisation, étant disposé dans l'évidement et fonctionnant comme un récipient structurel, sa paroi latérale (6a) étant formée de préférence par la paroi (11) délimitant l'évidement.
